# EUROPEAN PATENT SPECIFICATION

(11) **EP 3 346 231 B1**
(45) Date of publication and mention of the grant of the patent: **09.08.2023**
(21) Application number: 16841905.9
(22) Date of filing: 31.08.2016
(51) Int. Cl.: G01B 11/26, G01B 11/24, G01B 11/00, G01B 5/00

(54) **SURFACE-SHAPE MEASURING DEVICE AND SURFACE-SHAPE MEASURING METHOD AND PROGRAM**
OBERFLÄCHENFORMMESSVORRICHTUNG, OBERFLÄCHENFORMMESSMETHODE UND OBERFLÄCHENFORMMESSPROGRAMM
DISPOSITIF DE MESURE DE FORME DE SURFACE, MÉTHODE ET PROGRAMME DE MESURE DE FORME DE SURFACE

(30) Priority: 31.08.2015 JP 2015171423
(43) Date of publication of application: 11.07.2018
(73) Proprietor: Nikon Corporation, Tokyo 108-6290 (JP)
(72) Inventor: MIYAWAKI Takashi, Tokyo 108-6290 (JP)
(74) Representative: Hoffmann Eitle
(86) International application number: PCT/JP2016/075506
(87) International publication number: WO 2017/038875

(56) References cited:
- WO-A1-2014/185133
- DE-A1-102012 111 008
- JP-A- 2003 161 615
- JP-A- 2003 161 615
- JP-A- 2012 093 225
- JP-A- 2012 093 225
- JP-A- 2012 132 682
- JP-A- 2012 220 338
- JP-A- 2014 126 381
- US-A- 4 660 970

## Description

### BACKGROUND

### 1. TECHNICAL FIELD

The present invention relates to a surface shape measurement apparatus and a surface shape measurement program.

### 2. RELATED ART

For a contactless three-dimensional shape measurement device using probe light, a scanning path for a measurement head has been prespecified based on designed shape data of a measurement object such that the probe light is incident on a measurement surface as orthogonally as possible (see Japanese Patent Application Publication No. Hei. 11-51624, hereinafter Patent Document 1, for example).

DD 10 2012 111008 A1 discloses an optical measuring device in which distance to each of a triangular spot array of measurement points is obtained, and local inclination of the measurement object surface is inferred therefrom.

Each of JP 2014 126381 A, US 4 660 970 A, JP 2012 093225 A, JP 2003 161615 A and WO 2014185133A1 forms part of the state of the art.

### PROBLEMS TO BE SOLVED

If the designed shape data of the measurement object is unknown, it has been impossible to perform accurate shape measurement because the locus of operation of the measurement head can not be specified.

### SUMMARY

According to a first aspect of the present invention, there is provided a surface shape measurement apparatus as recited in Claim 1.

The detailed shape data may have a higher precision than the reference shape data.

It may include a support which supports the distance measurement device and the angle measurement device. It may include a driving part which moves the support relative to the measurement object. It may include a control part which controls the driving part. When measuring the inclination by the angle measurement device, the control part may cause the support to scan by the driving part such that the support opposes a tangent plane at the measurement point calculated from the reference shape data and a distance from the measurement point is constant.

The measurement object at least partially may have a substantially rotationally symmetric shape, and a target for measurement may be a surface shape of a rotationally symmetric surface. It may include a stage which supports the measurement object. It may include an actuation part which rotationally moves the stage around an axis parallel to a rotational symmetry axis of the rotationally symmetric surface. When measuring the distance by the distance measurement device and measuring the inclination by the angle measurement device, the stage may be rotationally moved by the actuation part.

The second calculation part may calculate an error amount of a placement error of the measurement object relative to the stage due to deviation between the rotational symmetry axis of the measurement object and a rotation axis of rotational movement of the stage. It may calculate the detailed shape data using the reference shape data modified in consideration of the error amount and an output of the angle measurement device.

The second calculation part may recalculate the error amount using the detailed shape data temporarily obtained. It may further recompute the detailed shape data based on the recalculated error amount.

According to a second aspect of the present invention, there is provided a surface shape measurement method as recited in Claim 10.

In the angle measurement step, a support which supports the distance measurement device and the angle measurement device may be caused to scan such that the support opposes a tangent plane at the measurement point calculated from the reference shape data and a distance from the measurement point is constant.

According to a third aspect of the present invention, there is provided a program as recited in Claim 12, or a computer readable recording medium storing the program as recited in Claim 13.

### BRIEF DESCRIPTION OF THE DRAWINGS

Fig. 1 is an overview showing the entirety of a surface shape measurement apparatus in accordance with the present embodiment.
Fig. 2 shows a system configuration of the surface shape measurement apparatus.
Fig. 3 is a perspective view of an example of a measurement object.
Fig. 4 is a cross-sectional view and an enlarged view illustrating a surface shape to be measured.
Fig. 5 is an illustration of the configuration of a measurement unit and the principle of measuring a distance and an angle.
Fig. 6 is an illustration of derivation of the surface shape.
Fig. 7 is an illustration of relative movement of the measurement object and a head.
Fig. 8 is an illustration of a measurement path of the measurement surface.
Fig. 9 is a flow chart illustrating the operation of the surface shape measurement apparatus in the present embodiment.
Fig. 10 is an illustration representing an operation of acquiring three-dimensional coordinate data of an unknown measurement object.
Fig. 11 is a flow chart representing a procedure of generating first shape data.
Fig. 12 is an illustration of a placement error of the measurement object.
Fig. 13 is a schematic illustration of calculation of the placement error.
Fig. 14 is an illustration of the relationship between a position near a measurement point and probe light.
Fig. 15 is a flow chart representing a procedure of generating second shape data.

### DESCRIPTION OF EXEMPLARY EMBODIMENTS

Hereinafter, (some) embodiment(s) of the present invention will be described. The embodiment(s) do(es) not limit the invention, the scope of which is defined by the appended claims, and all the combinations of the features described in the embodiment(s) are not necessarily essential to means provided by aspects of the invention.

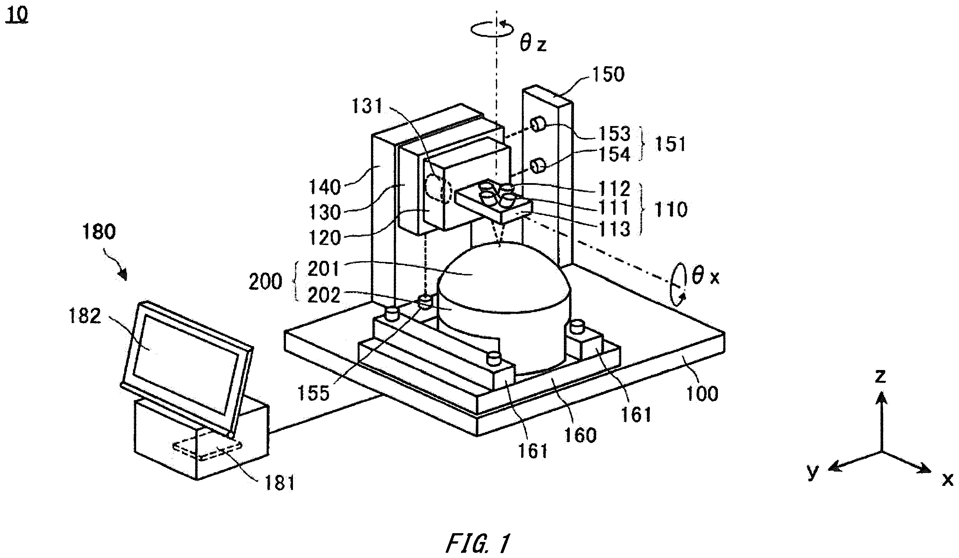

Fig. 1 is an overview showing the entirety of a surface shape measurement apparatus 10 in accordance with the present embodiment. The surface shape measurement apparatus 10 is an apparatus which is dedicated to a rotationally symmetric surface as its measurement target and strictly measures a surface shape.

The surface shape measurement apparatus 10 includes a base 100 as a base table part, and a first frame 140 and a second frame 150 which are securely fixed to the base 100. Each component of the surface shape measurement apparatus 10 related to sensing is assembled directly or indirectly to any of the base 100, the first frame 140 and the second frame 150.

The upper surface of the base 100 is a horizontal plane, and an axis in the horizontal plane is defined as an x-axis and an axis in the horizontal plane and orthogonal to the x-axis is defined as a y-axis. Also, a z-axis is defined in a vertical direction orthogonal to the horizontal plane. Also, the upward vertical direction is defined as a positive z-axis direction. Note that each subsequent figure clearly shows which direction the figure is observed in with respect to the x-y-z coordinate system shown in Fig. 1 in accordance with the above definitions.

An X-Y stage 160 is stacked on the upper surface of the base 100, and the X-Y stage 160 can parallelly move in x-y directions on the upper surface of the base 100 and also rotationally move around the z-axis. Note that, in the subsequent descriptions, rotational movement around the z-axis may be referred to as rotation in a θz direction or the like.

The X-Y stage 160 has a function as a table on which a measurement object 200 is placed, and fixes the measurement object 200 via a chuck 161. The measurement object 200 includes a measurement surface 201 and a holding part 202, and the chuck 161 clamps the holding part 202. The measurement surface 201 as a measurement target is a substantially rotationally symmetric surface having a rotational symmetry axis parallel to the z-axis in the attitude of Fig. 1. Here, the substantially rotationally symmetric surface does not refer to the exact rotationally symmetric surface, but refers to a surface in which minute unevenness exists in an asymmetric manner. If the measurement surface is, for example, a spherical lens, such minute unevenness may be generated as a processing error occurring in a polishing step of the fabrication process. The surface shape measurement apparatus 10 in accordance with the present embodiment is an apparatus which measures a measurement surface, which is a rotationally symmetric surface as a whole but has minute unevenness that is unevenly distributed therein as observed in a locally enlarged view, to acquire more precise surface shape information including information of the shape of such unevenness. Note that, in the present embodiment, the measurement surface 201 is a substantially rotationally symmetric surface whose designed shape data is unknown, in particular.

The measurement object 200 is placed on the X-Y stage 160 such that the rotational symmetry axis of the measurement surface 201 and the axis of rotation of the X-Y stage 160 in the θz direction coincide with each other. The measurement surface 201 of the measurement object 200 placed in this manner is rotationally moved around the rotational symmetry axis, and its surface shape is measured.

The first frame 140 is a supporting frame established vertically in the z-axis direction from the base 100. The first frame 140 supports the second support 130 above its y-z surface, and the second support 130 supports the first support 120 on a surface opposite to the surface supported by the first frame 140. The first support 120 supports the measurement unit 110 on a surface opposite to the surface supported by the second support 130. The measurement unit 110 is positioned in space above the measurement object 200 placed on the X-Y stage 160. The measurement unit 110, the first support 120 and the second support 130 are components of a head which moves relative to the measurement surface 201.

The second support 130 can parallelly move in the y-z plane relative to the first frame 140 by driving force of the later-described actuator disposed in the first frame 140 and a transmission mechanism disposed astride them. Here, a minus z-axis direction is a direction toward the measurement surface 201 of the measurement object 200 in an initial state of the surface shape measurement apparatus 10 as shown in the figure. The first support 120 can rotationally move around the x-axis relative to the second support 130 by driving force of the later-described actuator disposed in the second support 130 and a transmission mechanism disposed astride them. Note that, in the subsequent descriptions, rotational movement around the x-axis may be referred to as rotation in a θx direction or the like. The amount of movement of the second support 130 in the z direction relative to the first frame 140 is detected by the later-described Z sensor 155.

The angle of rotation of the first support 120 in the θx direction is detected by a rotary encoder 131 disposed in the second support 130. The measurement unit 110 includes a distance measurement device 111 and an angle measurement device 112, and a holder 113 supporting them. The distance measurement device 111 measures the distance to a measurement point on the measurement surface 201, and the angle measurement device 112 measures the inclination of the measurement surface at the measurement point. Specific configurations will be described later using figures. The holder 113 is fixed to the first support 120, and the measurement unit 110 does not move relative to the first support 120.

With such a configuration, the measurement unit 110 for measuring the surface shape of the measurement surface 201 can move in three degrees of freedom consisting of parallel movement in the y-z plane that is a plane including the direction toward the measurement surface 201 and rotational movement around the x-axis perpendicular to the plane (rotational movement in the θx direction). While the y-z plane is adopted as a plane including the direction toward the measurement surface 201 in the present example, no limitation is imposed as long as the measurement unit 110 can move in a plane including the direction toward the measurement surface 201. In other words, the plane is set such that the measurement unit 110 can move in a plane intersecting with the measurement surface 201 when the measurement object 200 is placed on the X-Y stage 160 and moved to a measurement position.

The second frame 150 is a supporting frame established vertically in the z-axis direction from the base 100. The second frame 150 fixes and supports an interferometer unit 151 above its x-z surface. The interferometer unit 151 is a sensor unit to detect the amount of movement of the second support 130 in the y direction and the angle of rotation of the second support 130 in the θx direction. The interferometer unit 151 specifically includes a first interferometer 153 and a second interferometer 154, each of which is a laser lightwave interferometric distance meter. A laser emitting part of the first interferometer 153 and a laser emitting part of the second interferometer 154 are disposed to be spaced apart from each other along the z-axis direction.

Fig. 1 shows an aspect of the first frame 140 and the second frame 150 where they are fixed to the base 100 independently of each other. The second frame 150 supports the interferometer unit 151 that performs precise measurement, and therefore is preferably not connected directly with the first frame 140 that supports the movable head and may vibrate.

The laser emitting part of the first interferometer 153 and the laser emitting part of the second interferometer 154 are disposed in the second frame 150 so as to be spaced apart from each other along the z-axis direction.

The computation part 187 calculates an angle Δθ of rotation of the second support 130 in the θx direction from the difference between two measured distances obtained from the outputs of the first interferometer 153 and the second interferometer 154 and the y-z coordinates of the respective light emitting parts.

Also, the first interferometer 153 and the second interferometer 154 are both originally distance meters to measure a distance in the y direction, and therefore the computation part 187 also calculates the amount of parallel movement of the second support 130 in the y direction. Specifically, the computation part 187 calculates the amount of parallel movement of the θx rotation center axis of the second support 130 in the y direction from two measured distances obtained from the outputs of the first interferometer 153 and the second interferometer 154, the y-z coordinates of the respective light emitting parts and the y-z coordinates of the θx rotation center axis.

The measurement control part 186 sends, when the measurement unit 110 is to be rotated in the θx direction, a control signal according to the angle of the rotation to the θx driving motor 132, which rotationally moves the first support 120. As described above, the second support 130 also rotates by Δθ in the θx direction in practice, and therefore the sum of the rotation angle of the first support 120 and the rotation angle of the second support 130 is to be considered as the whole of the head. Accordingly, if it is detected by the rotary encoder 131 that the first support 120 is rotated by θ_{R} in the θx direction with respect to the second support 130, the computation part 187 grasps that the measurement unit 110 is rotated by θ_{R} + Δθ in the θx direction relative to the coordinate system with respect to the base 100.

While Fig. 1 shows an aspect of the first frame 140 and the second frame 150 where they are fixed to the base 100 independently of each other, they may be connected to each other so as to enhance their rigidity as frames. Also, the first frame 140 and the second frame 150 can be integrally configured as a frame structure which covers the entire space above the base 100.

The control unit 180 includes a system control part 181 configured of, for example, a CPU, and a user interface 182 which receives an input from a user and presents measured surface shape information. The system control part 181 controls the entire surface shape measurement apparatus 10. The user interface 182 includes a liquid crystal display provided with a touch panel which receives an input from the user, for example.

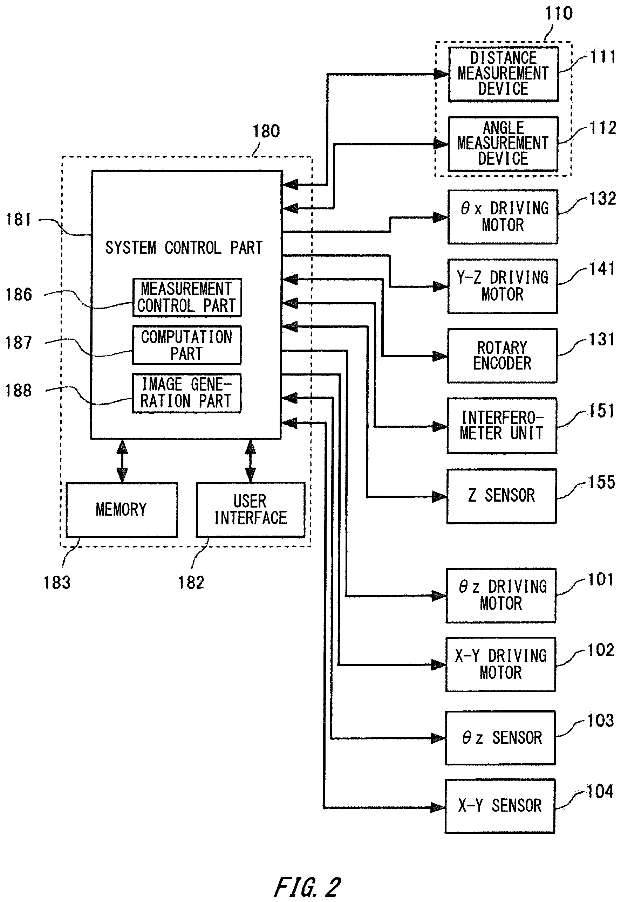

Fig. 2 shows a system configuration of the surface shape measurement apparatus 10. Specifically, the figure shows the relationship with main control targets for controls performed by the system control part 181.

The system control part 181 includes a measurement control part 186 which sends a control signal to each control target lined on the right side of the figure and controls a sequence of measurement steps, an computation part 187 which receives sensing results and performs various computations for identifying a surface shape, and an image generation part 188 which generates various plot image data. The measurement control part 186, the computation part 187 and the image generation part 188 may each be a virtual functional part of a CPU, or may have a hardware configuration such as an ASIC which is at least partially independent of the CPU.

The user interface 182 receives, from the user, inputs such as a condition about measurement, a condition about the fitting described later and an instruction of starting measurement, and sends them to the system control part 181. Also, the user interface 182 receives, from the system control part 181, the status of progress of a measurement sequence performed by the measurement control part 186, surface shape information and the like computed by the computation part 187, and displays them.

The control unit 180 includes a memory 183 configured of a flash memory, for example. The memory 183 may be configured of a plurality of storage media. The memory 183 stores various programs performed by the system control part 181, including a measurement control program performed by the measurement control part 186 and a computation program performed by the computation part 187. The memory 183 also functions as a working memory of computation performed by the computation part 187 or the like. The memory 183 also has a function to retain various parameters and data which are input by the user via the user interface 182 or sent from external equipment via a network.

The measurement control part 186 controls the distance measurement device 111 and the angle measurement device 112 constituting the measurement unit 110. The measurement control part 186 sends a control signal to the distance measurement device 111 to start distance measurement, and receives its output. Similarly, it sends a control signal to angle measurement device 112 to start angle measurement, and receives its output. The measurement control part 186 delivers the received outputs to the computation part 187.

The measurement control part 186 controls a θx driving motor 132 which rotates the first support 120 in the θx direction relative to the second support 130. The θx driving motor 132 is the above-described actuator disposed in the second support 130, and a brushless motor can be used for it, for example. The measurement control part 186 sends, when the measurement unit 110 is to be rotationally moved in the θx direction, a drive signal according to the rotation angle to the θx driving motor 132.

The measurement control part 186 controls a Y-Z driving motor 141 which moves the second support 130 in y-z directions relative to the first frame 140. The Y-Z driving motor 141 is the above-described actuator disposed in the first frame 140, and two brushless motors respectively corresponding to the y direction and the z direction can be used for it, for example. The measurement control part 186 sends, when the measurement unit 110 is to be parallelly moved in y-z directions, a drive signal according to the movement amount to the Y-Z driving motor 141. That is, as described above, the measurement unit 110 can move in three degrees of freedom consisting of parallel movement in the y-z plane and rotational movement around the x-axis, and such movement can be realized by the Y-Z driving motor 141 and the θx driving motor 132 as driving parts.

The measurement control part 186 sends a control signal to the rotary encoder 131 to start rotation angle detection, and receives its output. The measurement control part 186 delivers the received output to the computation part 187. Similarly, the measurement control part 186 sends a control signal to the interferometer unit 151 to start distance detection, and receives its output. The measurement control part 186 delivers the received output to the computation part 187. The computation part 187 computes, based on the received outputs, the amount of movement of the second support 130 in the y direction and the angle of rotation of the second support 130 in the θx direction relative to the first frame 140.

The measurement control part 186 sends a control signal to the Z sensor 155 to start distance detection, and receives its output. The measurement control part 186 delivers the received outputs to the computation part 187. The Z sensor 155 is a distance sensor which detects the amount of movement of the second support 130 in the z direction relative to the first frame 140. The Z sensor 155 is configured of one laser lightwave interferometric distance meter, for example.

The measurement control part 186 controls a θz driving motor 101 which rotates the X-Y stage 160 in the θz direction relative to the base 100. The θz driving motor 101 is, for example, a brushless motor disposed in the base 100. The measurement control part 186 sends, when the measurement surface 201 of the measurement object 200 is to be rotationally moved in the θz direction, a drive signal according to the rotation angle to the θz driving motor 101.

The measurement control part 186 controls an X-Y driving motor 102 which moves the X-Y stage 160 in x-y directions relative to the base 100. The X-Y driving motor 102 consists of, for example, two brushless motors disposed in the base 100 and respectively corresponding to the x direction and the y direction. The measurement control part 186 sends, when the measurement surface 201 of the measurement object 200 is to be parallelly moved in x-y directions, a drive signal according to the movement amount to the X-Y driving motor 102.

The measurement control part 186 sends a control signal to a θz sensor 103 to start rotation angle detection, and receives its output. The measurement control part 186 delivers the received output to the computation part 187. The θz sensor 103 is a rotation angle detection sensor which detects the angle of rotation of the X-Y stage 160 in the θz direction relative to the base 100. The θz sensor 103 is configured of a rotary encoder, for example.

The measurement control part 186 sends a control signal to an X-Y sensor 104 to start movement amount detection, and receives its output. The measurement control part 186 delivers the received output to the computation part 187. The X-Y sensor 104 is a movement amount detection sensor which detects the amount of movement of the X-Y stage 160 in x-y directions relative to the base 100. The X-Y sensor 104 is configured of, for example, two laser lightwave interferometric distance meters respectively disposed toward the x direction and the y direction.

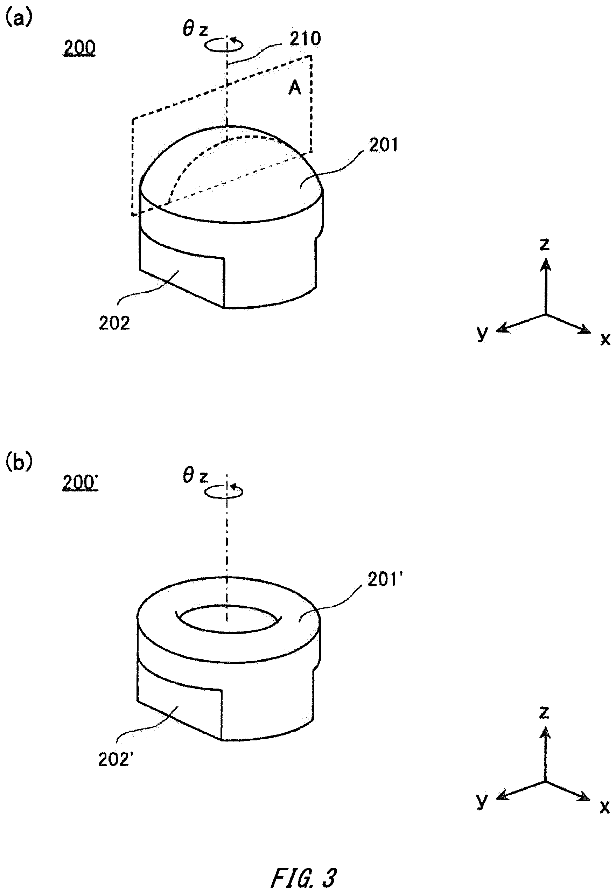

Next, a description will be made of the measurement object. Fig. 3 (a) is a perspective view showing the measurement object 200 as an example of the measurement object to be measured by the surface shape measurement apparatus 10 in the present embodiment, and Fig. 3 (b) is a perspective view of a measurement object 200' as an example of another measurement object.

As described above, the surface shape measurement apparatus 10 in the present embodiment is an apparatus which strictly measures the surface shape of a substantially rotationally symmetric surface, and therefore at least part of the surface of a measurement object is a substantially rotationally symmetric surface. The measurement surface 201 of the measurement object 200 is a spherical surface protruding in the plus z-axis direction. The measurement surface 201 generally has, assuming that its rotational symmetry axis 210 is the z-axis and its radius is c, a shape obtained by a single rotation of (c²-x²)^{1/2} in the first quadrant of the x-z plane around the z-axis.

The measurement surface has a shape obtained by a single rotation of the function represented in the first quadrant of the x-z plane around the z-axis, and may have a shape having a concaved top surface such as a measurement surface 201' of the measurement object 200'. Note that, although the measurement objects 200 and 200' shown in the figure respectively include holding parts 202 and 202' so as to be easily fixed to the chuck 161, the surface shape of a measurement object not including such a holding part can even be measured as long as it is fixed to the X-Y stage 160 via some tool, for example.

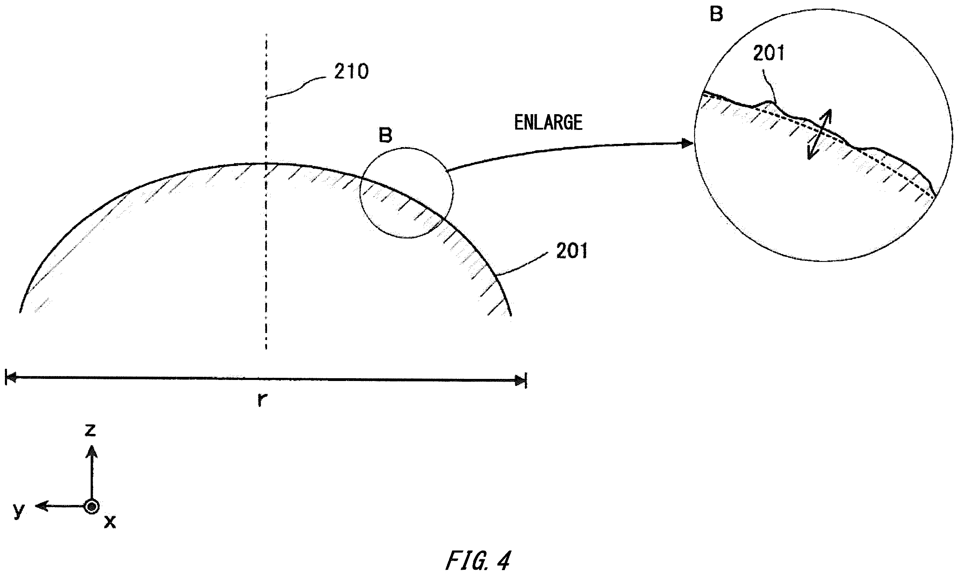

Fig. 4 is a cross-sectional view and an enlarged view illustrating a surface shape to be measured. The cross-sectional view of Fig. 4 represents a section of the measurement object 200 taken in the plane A including the rotational symmetry axis 210 shown in Fig. 3 (a). As described above, the measurement surface 201 is a rotationally symmetric surface as a whole, but has minute unevenness as seen in a locally enlarged view. The present embodiment assumes a measurement surface whose shape projected on the x-y plane has an outer perimeter of around ϕ100 mm (r in the figure). Then, the resolution for the depth direction of unevenness can be set to around 1 nm in accordance with the configuration and measurement principle of the measurement unit as described later. Here, the term "resolution" refers to the finest unit at which the shape of a measurement target object can be identified as computed row data, and the "precision" at which the probability of measurement results is ensured is around 10 nm in the present embodiment. However, these orders may be changed depending on the configuration of the apparatus, the precision of sensors or the like. Note that the depth direction of unevenness refers to the direction of the arrow shown in the enlarged view. More specifically, it refers to the direction orthogonal to the rotationally symmetric surface (indicated by the dotted line in the enlarged view).

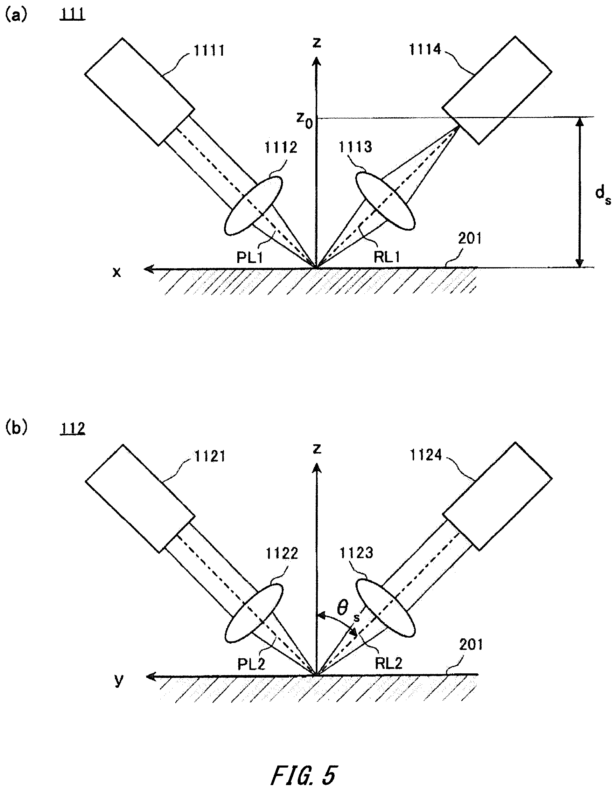

Next, a description will be made of the measurement unit 110. Fig. 5 is an illustration of the configuration and measurement principle of the measurement unit 110. In particular, Fig. 5 (a) is an illustration of the configuration and measurement principle of the distance measurement device 111, and Fig. 5 (b) is an illustration of the configuration and measurement principle of the angle measurement device 112. Each figure represents an example where a vertex of the measurement surface 201 is positioned at the origin of coordinates, and in which case the vertex is set as the measurement point.

The distance measurement device 111 is configured of a first light source 1111 which generates first probe light, a condenser lens 1112 which condenses the first probe light generated by the first light source 1111 (first irradiation light PL1) to irradiate a measurement point on the measurement surface 201, a condenser lens 1113 which condenses the first probe light reflected at the measurement point (first reflected light RL1), a photodetector 1114 which detects the position of the first reflected light RL1, and the like.

The angle measurement device 112 is configured of a second light source 1121 which generates second probe light, a condenser lens 1122 which condenses the second probe light generated by the second light source 1121 (second irradiation light PL2) to irradiate a measurement point on the measurement surface 201, a collimator lens 1123 which collimates the second probe light reflected at the measurement point (second reflected light RL2), a photodetector 1124 which detects the position of the second reflected light RL2, and the like.

The first light source 1111 and the second light source 1121 are laser light sources with stabilized oscillation wavelength, optical output, beam pointing and the like, and a fiber laser, a DFB semiconductor laser or the like is used for them, for example. Output parts of the first light source 1111 and the second light source 1121 are provided with a collimator, and the first irradiation light PL1 and the second irradiation light PL2 converted into parallel light pencils are output from the respective light sources. The photodetectors 1114 and 1124 are detectors to detect the positions of the first reflected light RL1 and the second reflected light RL2, respectively, and a QPD (quadrant photodetector), an image capturing device such as CMOS or the like can be used for them, for example.

For the distance measurement device 111, the first irradiation light PL1 emitted from the first light source 1111 is condensed by the condenser lens 1112 and incident at the measurement point. The first reflected light RL1 reflected at the measurement point is condensed by the condenser lens 1113 and incident in the photodetector 1114. With the distance measurement device 111, even if the inclination of the reflection surface at the measurement point is varied (tilted), the incident position of the first reflected light RL1 condensed and incident in the photodetector 1114 is not varied. On the other hand, if the position of the measurement point is varied (shifted) in the upward/downward direction (z-axis direction), the incident position of the first reflected light RL1 condensed and incident in the photodetector 1114 is varied. Thus, a distance dₛ from a reference position z₀ of the measurement unit 110 to the measurement point can be calculated based on a position detecting signal output from the photodetector 1114 to the measurement control part 186. Note that the reference position z₀ may be, for example, the z coordinate of the rotation axis around which the first support 120 is rotated in the θx direction, or may be the z coordinate of a reference plane of the measurement unit 110 when it is opposed to the measurement surface 201.

For the angle measurement device 112, the second irradiation light PL2 emitted from the second light source 1121 is condensed by the condenser lens 1122 and incident at the measurement point. The second reflected light RL2 reflected at the measurement point is collimated by the collimator lens 1123 and incident in the photodetector 1124. With the angle measurement device 112, even if the position of the measurement point is varied (shifted) in the upward/downward direction, the incident position of the second reflected light RL2 incident in the photodetector 1124 is almost not varied. On the other hand, if the inclination of the reflection surface at the measurement point is varied (tilted), the incident position of the second reflected light RL2 incident in the photodetector 1124 is varied. Thus, based on an angle detecting signal output from the photodetector 1124 to the measurement control part 186, a reflection angle θₛ of the reflection surface at the measurement point can be calculated, and further an inclination angle that is the inclination of the reflection surface (described later) can be calculated.

In the present embodiment, the distance measurement device 111 and the angle measurement device 112 are fixed to the holder 113, being adjusted such that a first reference plane formed by the first irradiation light PL1 and the first reflected light RL1 and a second reference plane formed by the second irradiation light PL2 and the second reflected light RL2 in the case where the inclination of the reflection surface at the measurement point is zero are orthogonal to each other. For positioning of the figure, the first reference plane is in the x-z plane and the second reference plane is in the y-z plane. Also, the distance measurement device 111 and the angle measurement device 112 are fixed to the holder 113, being adjusted such that the reflection points (measurement points) of the respective probe light overlap with each other at a reference distance d₀ from the reference position z₀. Note that Fig. 5 is depicted for the case where z₀ = d₀ = dₛ.

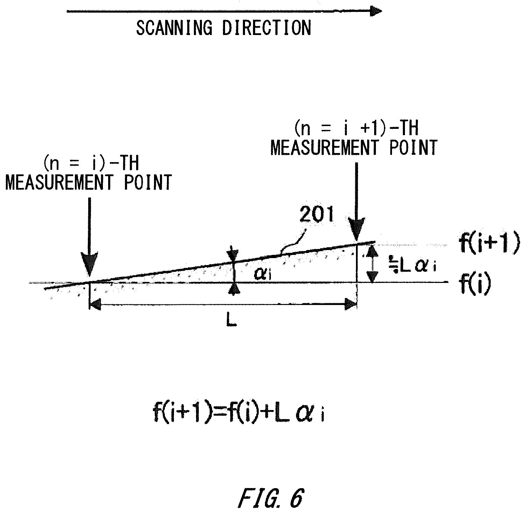

Next, a description will be made of a method for deriving the surface shape. Fig. 6 is an illustration of derivation of the surface shape. It is regarded that the measurement unit 110 scans from the left side to the right side of the paper in the figure, and performs measurement at every sampling interval L. The figure represents, assuming that the number of times of sampling is n, the surface shape of the measurement surface 201 in the (n = i)-th measurement and the (n = i + 1)-th measurement.

As described above, the surface shape measurement apparatus 10 in accordance with the present embodiment has a precision of around 10 nm for the depth direction of unevenness. If it is attempted to obtain a precision of 10 nm only with the distance measurement device 111, it is thus required to prepare a distance measurement device having an output precision of 10 nm. Such a distance measurement device is not very practical due to being expensive and large in size. Thus, for the surface shape measurement apparatus 10 in accordance with the present embodiment, the distance measurement device 111 itself is a distance measurement device only having a capability of a lower precision than the target precision, and the angle measurement device 112 is provided in conjunction with the distance measurement device 111.

As shown in the figure, if an inclination angle as the inclination of the reflection surface is calculated as αᵢ (rad) from an output of the angle measurement device 112 in the (n = i)-th measurement, the amount of displacement to the (n = i)-th measurement point in the depth direction is approximated as Lαᵢ if αᵢ is a minute angle. Accordingly, if the depth-direction coordinate at the (n = i)-th time is f(i), the coordinate f(i+1) at the (n = i + 1)-th time is calculated as f(i) + Lαᵢ.

Here, if Lαᵢ is 10 nm and assuming that L = 1 mm, αᵢ is 10 µrad. That is, if the angle measurement device 112 has a capability of 10 µrad as its output precision, measurement can be performed with a precision of 10 nm in the depth direction even if the sampling interval is around 1 mm. To configure the surface shape measurement apparatus, it is easy to prepare an angle measurement device having an output precision of 10 µrad to perform control at a sampling interval of 1 mm, compared to preparing a distance measurement device with an output precision of 10 nm. Also, the sampling control at L = 1 mm is relatively easy, and therefore adopting a shorter sampling interval allows further enhancement of the precision in the depth direction.

On the other hand, it is desirable to use the distance measurement device 111 in order that the measurement point as the target of the angle measurement device 112 and the reflection point of the second probe light coincide with each other. That is, if the scanning is performed such that the distance between the reference position z₀ of the measurement unit 110 and the measurement surface 201 is kept at the reference distance d₀ while monitoring the output of the distance measurement device 111, both measurement points of the distance measurement device 111 and the angle measurement device 112 coincide with each other, and therefore the measurement control part 186 can accurately grasp the measurement point being measured by the angle measurement device 112. If the distance measurement device 111 is not provided in conjunction, it is required to prepare another apparatus for accurately grasping the coordinates of the measurement point for the angle measurement device 112.

Here, if the distance to the measurement surface 201 is kept at the reference distance d₀, an error range of the distance may be much wider than that of the depth-direction precision with which measurement is to be performed using the angle measurement device 112. That is, the output precision required for the distance measurement device 111 may be lower than the depth-direction precision with which measurement is to be performed. For example, it may be around 10 µm if the depth-direction precision with which measurement is to be performed is around 10 nm.

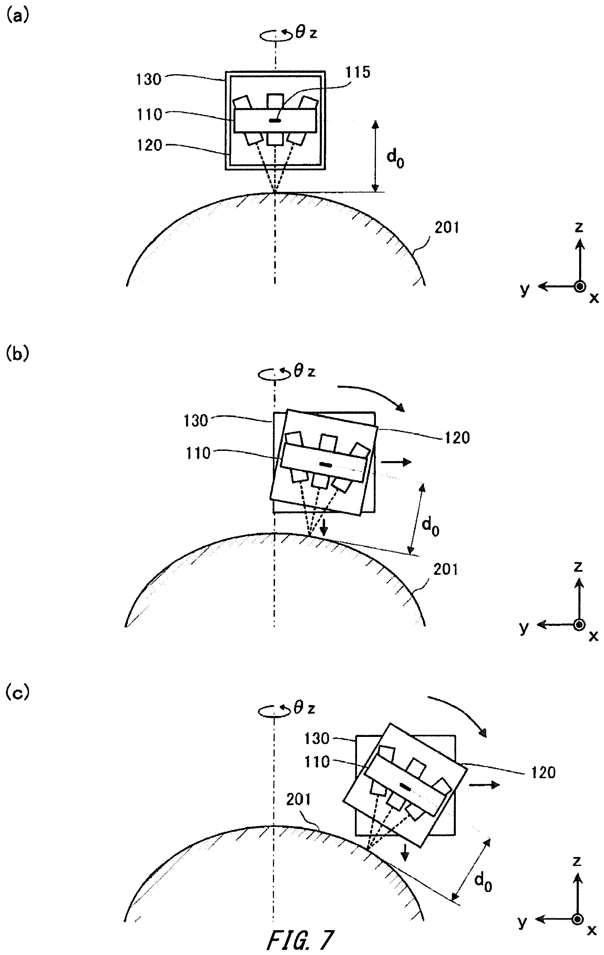

Next, a description will be made of the operation of the measurement object 200 and the head in measurement. Fig. 7 is an illustration of relative movement of the measurement object 200 and the head. Here, a reference position 115 of the head is set on the rotation axis around which the first support 120 is rotated in the θx direction.

Fig. 7 (a) shows an initial state in which the vertex of the rotationally symmetric surface can be measured. The measurement control part 186 acquires in advance first shape information as a piece of basic information of the measurement object 200. Here, the first shape information is approximate shape data generated in the process of generating general shape data described later. In subsequent descriptions, the first shape information may be referred to as first shape data. The first shape data is a model defined in virtual space, and the position, attitude and shape thereof are defined in a set reference coordinate system. In the present embodiment, the first shape data is represented by a function.

Using the acquired first shape data, the measurement control part 186 moves the first support 120, the second support 130 and the X-Y stage 160 such that the reference position 115 is positioned above and at a distance of d₀ from the vertex of the rotationally symmetric surface that is the measurement surface 201. Then, the measurement control part 186 moves the measurement unit 110 to oppose the tangent plane of the vertex. In subsequent scanning processes as well, the measurement control part 186 controls the measurement unit 110 to oppose the tangent plane at the measurement point calculated from the acquired first shape data. That the measurement unit 110 opposes a tangent plane means that the tangent plane is also orthogonal to the first reference plane and the second reference plane as described above.

Fig. 7 (b) shows the case where the measurement point is moved a little toward the periphery from the vertex of the measurement surface 201. The measurement control part 186 parallelly moves the second support 130 in the y direction and the z-axis direction, and also rotationally moves the first support 120 in the θx direction. More specifically, the movement is performed such that the distance from the reference position 115 is kept at d₀ while the tangent plane at the targeted measurement point and the measurement unit 110 oppose. The measurement control part 186 simultaneously rotationally moves the X-Y stage 160 in the θz direction.

Then, the measurement control part 186 does not parallelly move the X-Y stage 160 in x-y directions. The measurement control part 186 moves the X-Y stage 160 in parallel with the x-y plane when the measurement object 200 is to be moved to the position of the initial state after the user places the measurement object 200 on the X-Y stage 160, but does not perform the parallel movement during the measurement sequence for measuring the measurement surface 201. Accordingly, although the function to move the X-Y stage 160 in x-y directions is useful when the measurement object 200 is to be moved to the position of the initial state, the movement function can be omitted.

Also, the measurement control part 186 utilizes an output of the Z sensor 155 when the measurement unit 110 is to be moved to the position of the initial state. However, in scanning processes after the measurement unit 110 reaches the initial state, the measurement control part 186 can grasp the z direction position from the output of the distance measurement device 111, and therefore the output of the Z sensor 155 may not be monitored.

Fig. 7 (c) shows the case where the measurement point is further moved toward the periphery. The measurement control part 186 further parallelly moves the second support 130 in the y direction and the z direction, and also further rotationally moves the first support 120 in the θx direction. The measurement control part 186 continues to rotationally move the X-Y stage 160 in the θz direction.

As apparent from the transition from Fig. 7 (a) to Fig. 7 (c), scanning of the head relative to the measurement surface 201 is performed only in a direction along the y-axis, and does not involve parallel movement in the x direction. Also, scanning in the y direction is performed only in the negative y region in the figure, and scanning is not performed in the positive region. That is, by rotationally moving the X-Y stage 160 in the θz direction, the entire measurement surface can be measured by such a simple movement control. In other words, the degree of freedom that the head is to have and the degree of freedom that the stage on which the measurement object is placed is to have are optimized for the dedicated purpose of measuring the surface shape of a rotationally symmetric surface. In this manner, the drive configuration of the head and the drive configuration of the stage can each be simplified. In particular, simplification of the drive configuration of the head contributes to weight reduction of the head and also contributes to speed enhancement of movement of the head.

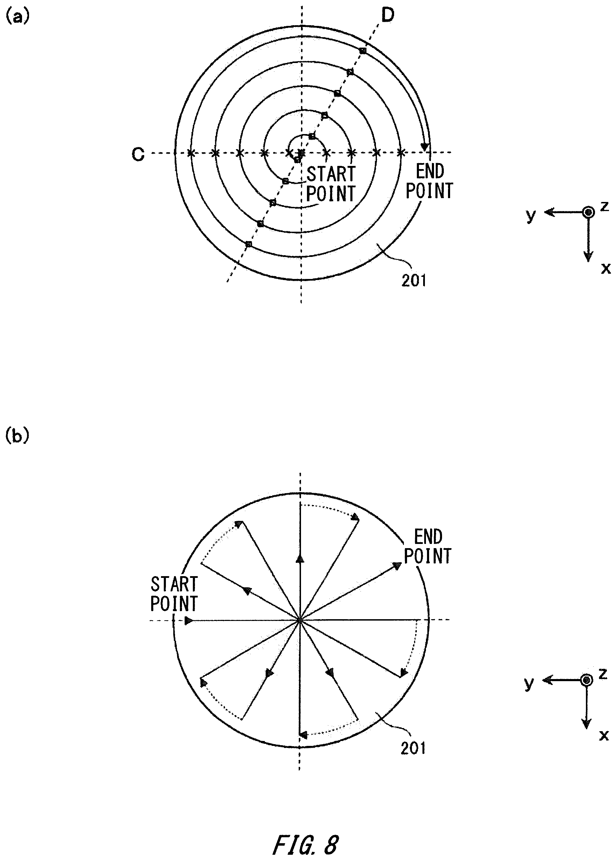

Fig. 8 is an illustration of a measurement path of the measurement surface 201. Fig. 8 (a) shows a measurement path formed by the controls described using Fig. 7 as observed in the z direction. Here, the measurement path is a locus obtained by connecting adjacent measurement points.

A start point is the vertex of the rotationally symmetric surface, and corresponds to the initial state as shown in Fig. 7 (a). As apparent from the figure, the measurement path forms a spiral. As measurement is performed along the path, the measurement control part 186 receives outputs from the angle measurement device 112 in the order along the path. However, in order to obtain a cross-sectional view in a section along the line C in the figure, for example, the measurement results at the cross-marked points where the line C and the spiral path intersect are extracted and rearranged. Similarly, in order to obtain a cross-sectional view in a section along the line D, the measurement results of the square-marked points where the line C and the spiral path intersect are extracted and rearranged. If an intersection point is not a measurement point, it is required to perform interpolation from the measurement results of neighboring measurement points for the calculation.

Note that the inclination angle at the measurement point calculated from the output of the angle measurement device 112 is calculated as an angle formed by the tangent plane at a measurement point calculated from the first shape data and an actual tangent plane at the measurement point. Accordingly, if the depth in a direction along a certain path is to be calculated, the computations described using Fig. 6 are performed after converting it into angle along the direction. Note that computations from when the output of the angle measurement device 112 is obtained until when surface shape data that is second shape information having a higher precision than the first shape data is calculated are performed by the computation part 187 that functions as a second calculation part. In subsequent descriptions, the second shape information may be referred to as second shape data.

Fig. 8 (b) shows a measurement path of another example as observed in the z direction. If information of the cross-sectional shape taken in a particular section is to be obtained without performing the above-described interpolation, the measurement path may be set to form a radial locus centered at the vertex as shown in the figure. If a plurality of pieces of cross-sectional shape information is to be obtained, setting the start point near the end portion of the measurement surface 201 rather than at the vertex allows the measurement path to be set in a unicursal manner. If such a measurement path is to be set, the measurement control part 186 performs scanning by moving the head also in the positive y region described in Fig. 7. Also, the measurement control part 186 performs rotational movement of the X-Y stage 160 in the θz direction only when movement is performed along the arc paths in the figure. Then, the measurement control part 186 does not perform movement of the first support 120 and the second support 130.

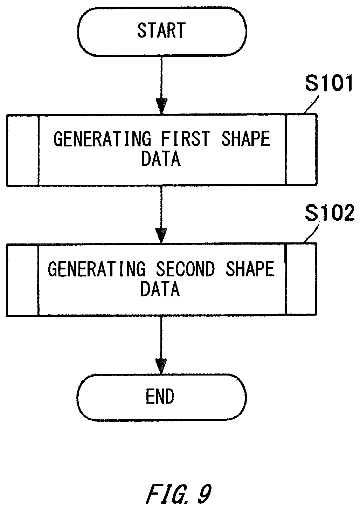

Fig. 9 is a flow chart illustrating the operation of the surface shape measurement apparatus in the present embodiment. As shown in Fig. 9, the operation of the surface shape measurement apparatus 10 is broadly divided into generation of the first shape data (step S101) and generation of the second shape data (step S 102). At step S101, the surface shape measurement apparatus 10 generates the first shape data from three-dimensional coordinate data of the measurement surface 201 acquired by the distance measurement device 111. Next, at step S102, the surface shape measurement apparatus 10 generates the second shape data from four-dimensional data including a coordinate value and a surface inclination value acquired by the distance measurement device 111 and the angle measurement device 112 using the generated first shape data.

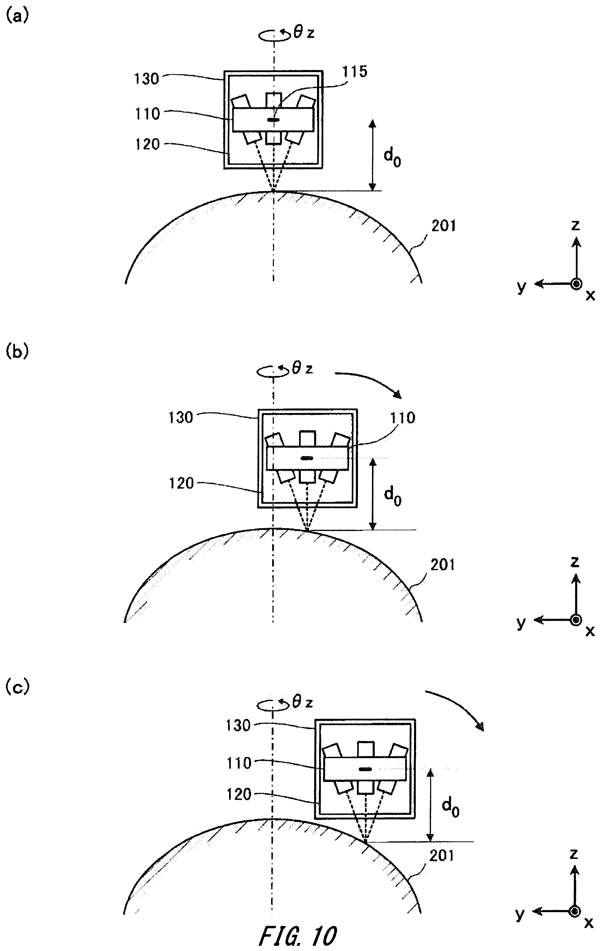

Fig. 10 is an illustration of an operation of acquiring the first shape data that is three-dimensional coordinate data of a measurement object whose shape data is unknown. Here, the fact that the surface shape of the unknown measurement object is substantially rotationally symmetric is regarded to be known. Note that the contents described using Fig. 7 are omitted.

Fig. 10 (a) an initial state in which the vertex of the rotationally symmetric surface or a point near the vertex can be measured. In a sequence of acquiring three-dimensional coordinate data for generating the first shape data, only the distance measurement device 111 is used among the two measurement devices.

First, a user arranges the measurement object on the X-Y stage such that the vertex of a rotationally symmetric surface that is the measurement surface 201 and the rotation axis of the X-Y stage 160 approximately coincide with each other. Then, the first support 120, the second support 130 and the X-Y stage 160 are moved such that the reference position 115 is positioned above and at a distance of d₀ from the vertex of the rotationally symmetric surface that is the measurement surface 201. Then, the measurement control part 186 sets the attitude of the measurement unit 110 to be horizontal. In subsequent scanning processes as well, the measurement control part 186 keeps the attitude of the measurement unit 110 to be horizontal, and does not rotationally drive the first support 120 relative to the second support 130. That is, driving is performed such that the line of intersection of the first reference plane, which is a plane formed by the optical axis of the condenser lens 1112 and the optical axis of the condenser lens 1113, and the second reference plane, which is a plane formed by the optical axis of the condenser lens 1122 and the optical axis of the collimator lens 1123, is substantially parallel to the z-axis in the sequence of acquiring the three-dimensional coordinate data.

Fig. 10 (b) shows the case where the measurement point is moved a little toward the periphery from the vertex of the measurement surface 201. The measurement control part 186 parallelly moves the second support 130 in the y direction and the z direction. More specifically, the second support 130 is moved such that the distance from the reference position 115 is kept at d₀. The measurement control part 186 simultaneously rotationally moves the X-Y stage 160 in the θz direction. Then, the measurement control part 186 does not parallelly move the X-Y stage 160 in x-y directions.

Fig. 10 (c) shows the case where the measurement point is further moved toward the periphery. The measurement control part 186 further parallelly moves the second support 130 in the y direction and the z direction. The measurement control part 186 continues to rotationally move the X-Y stage 160 in the θz direction.

Three-dimensional coordinate data of the measurement surface 201 is obtained from the y-z coordinates of the reference position 115 of the head, the rotation angle θz of the X-Y stage 160 and the reference distance d₀. Note that, as described with reference to Fig. 8, measurement points are arranged on a radial line passing through a spiral path and through the rotation center on the measurement surface 201.

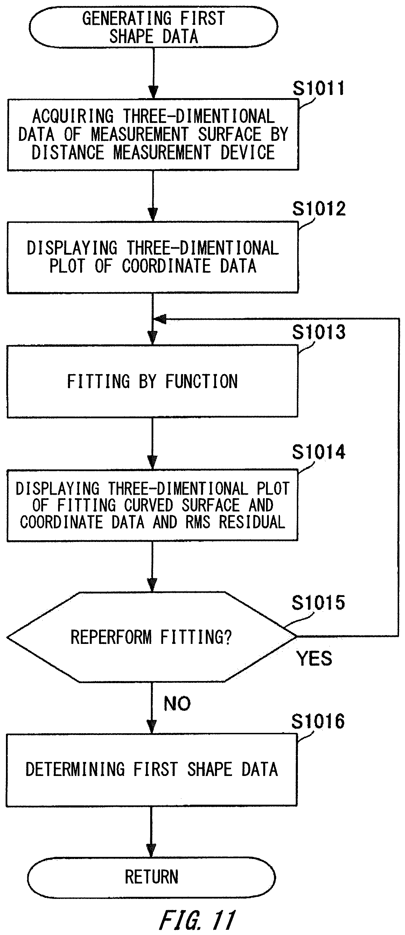

Fig. 11 is a flow chart representing a procedure of generating the first shape data and shows a specific flow of step S101 in Fig. 9. Note that, in the flow, step S1011 starts at the time after the measurement object 200 is arranged on the X-Y stage 160 by the user and when an instruction of generating the first shape data is received from the user via the user interface 182.

At step S1011, the measurement control part 186 drives the X-Y stage 160, the first support 120 and the second support 130 to move the measurement object 200 to an initial position. Then, while driving the X-Y stage 160 and the second support 130 to cause the measurement unit 110 scan the measurement surface 201 as described using Fig. 10, three-dimensional coordinate values of the measurement surface 201 detected by the distance measurement device 111 are acquired to sequentially accumulate them in the memory 183. When the end point of the measurement points is reached, the flow advances to step S1012.

The image generation part 188 generates three-dimensional plot image data representing a spatial distribution of the three-dimensional coordinate data accumulated in the memory 183, and displays it as a three-dimensional plot image on the user interface 182 (step S1012). By virtue of the display of the three-dimensional plot, the user can visually grasp a general shape of the unknown measurement surface 201, and can use it as a guide for selecting the fitting parameters described later.

The computation part 187 performs fitting by function in order to generate a function representing an approximate curved surface of the acquired three-dimensional coordinate data as the first shape data (step S1013). In the following descriptions, the function may be referred to as a fitting function. The computation part 187 functions as a first calculation part which calculates the first shape data from the acquired three-dimensional coordinate data of the measurement surface 201.

Information of the fitting function is prestored in the memory 183. The fitting function is, for example, a Zernike polynomial. Note that, while a plurality of notational systems such as Standard Zernike and FRINGE Zernike, which are different in the order of terms from each other, can be used for for Zernike polynomials, the following descriptions describes the case of FRINGE Zernike.

The computation part 187 stores Zernike coefficients selected and specified by the user via the user interface 182 and used for fitting, as parameter information in the memory 183. For example, if the measurement surface 201 is a rotationally symmetric surface, the Zernike coefficients of terms of the Zernike polynomial representing a rotationally symmetric shape, such as the fourth term, the ninth term and the sixteenth term, are selected as parameters. In the following descriptions, the parameters may be referred to as fitting parameters.

For example, the fitting is performed by numerical optimization which derives the optimal combination of parameters by repeatedly varying the fitting parameters (Zernike coefficients) such that the sum of the squares of deviations of the three-dimensional coordinate data from the fitting function (Zernike polynomial) is minimized. Here, the damped least squares method can be used as the optimization method, for example, but the method is not so limited and may adopt a known optimization method.

When the above fitting process ends, the computation part 187 calculates a fitting residual. Here, the fitting residual indicates the gap between the fitting function and the three-dimensional coordinate data, and is an RMS (root mean square) value, for example. In the following descriptions, the fitting residual may be referred to as an RMS residual. The computation part 187 stores the calculated RMS residual in the memory 183.

The image generation part 188 generates three-dimensional plot image data of the found fitting function and the three-dimensional coordinate data, and displays it as a three-dimensional plot image together with the RMS residual value on the user interface 182 (step S1014). In this manner, the user can check the precision of the fitting. Also, the user can check a region in which the fitting is not satisfactorily performed, and it becomes easy to specify a parameter lacking as a degree of freedom (a Zernike term required for the fitting).

The system control part 181 receives an instruction of whether or not to reperform the fitting process from the user (step S1015). For example, a display window for making the user select whether to end the fitting process or to reperform the fitting process with fitting parameters added or changed is displayed on the user interface 182.

If the the specification of the fitting parameters is changed and it is determined that an instruction to reperform the fitting process is given the user (YES at step S1015), the system control part 181 advances to step S1013 and performs the subsequent flow.

On the other hand, if an instruction to end the fitting process is given by the user, that is, if it is determined that an instruction to reperform the fitting is not given (NO at step S1015), the system control part 181 determines the acquired fitting function as the first shape data, and stores it in the memory 183. Then, a sequence of processes of generating the first shape data ends.

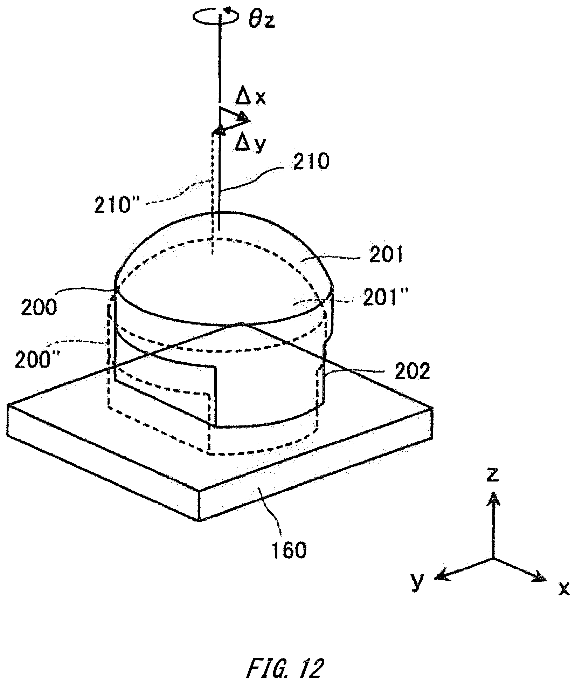

Fig. 12 is an illustration of the placement error of the measurement object 200. The measurement object 200 indicated by the solid line is correctly placed at the target position on the X-Y stage 160. The rotational symmetry axis 210 of the measurement surface 201 coincides with the axis of rotation of the X-Y stage 160 in the θz direction. On the other hand, a measurement object 200" indicated by the dotted line is placed with a deviation relative to the X-Y stage 160. In the example of the figure, the vertex of a measurement surface 201" of the measurement object 200" is deviated by Δx in the x direction and Δy in the y direction relative to the vertex of the measurement surface 201 of the measurement object 200. Note that the chuck 161 to fix the measurement object 200 is omitted in the figure.

The deviation may occur not only in the x direction and the y direction but also in the z direction, the θx direction, the θy direction and the θz direction. It may be due to deviation between the chuck 161 and the X-Y stage 160, deviation between the chuck 161 and the holding part 202 of the measurement object 200 and the like. However, some deviation components can be substantially ignored by precisely configuring the chuck 161 and the X-Y stage 160 with each other or adopting a precisely plane surface as the bottom surface of the measurement object 200. If some deviation components can be substantially ignored, the load of the fitting computation described later is mitigated.

In the present embodiment, the surface shape measurement apparatus 10 presents the amount of unevenness relative to a first shape data as a measurement result of the surface shape. The first shape data is acquired in advance through the process of generating general shape data described with reference to Fig. 10 and Fig. 11. Thus, in the present embodiment, the placement error relative to the target position is calculated by comparing the surface information of the first shape data in the case of placement at the target position and the measurement result that is actually measured.

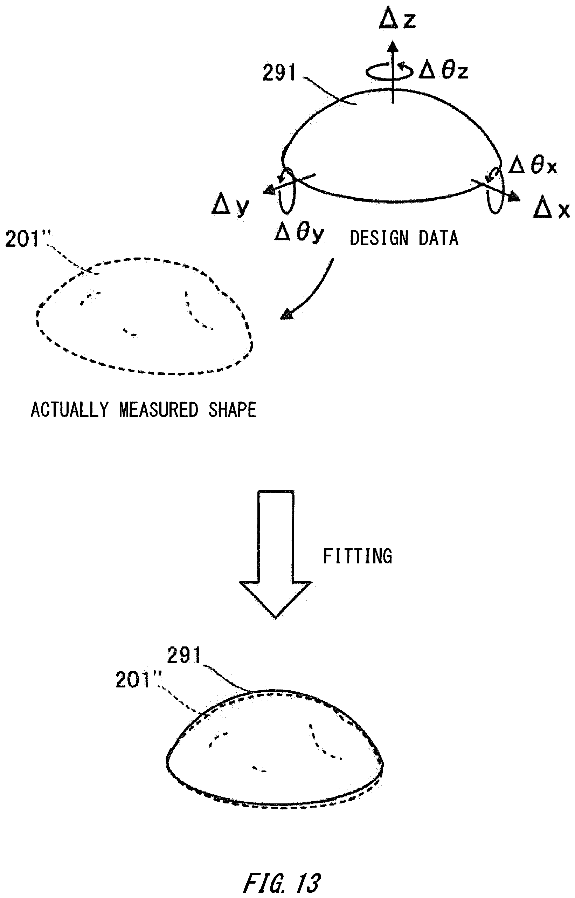

Fig. 13 is a schematic illustration of calculation of the placement error. A temporary surface shape of the measurement surface 201" placed with a deviation relative to the target position is calculated from the output of the measurement unit 110. As described using Fig. 7, scanning of the measurement unit 110 is performed based on the first shape data in the case of placement at the target position, and therefore a measurement point recognized by the measurement control part 186 is deviated from an actual measurement point, and the precision of the surface shape that is first calculated is not high. However, unevenness in the surface is minute, and therefore it can be regarded that the entire shape of the surface to be calculated is very close to the surface shape of the first shape data. Thus, the placement error is calculated by fitting the surface shape of the first shape data with this actually measured surface shape.

The fitting computation for calculating the placement error is an operation of calculating the amounts of movement of the first shape data when it is moved in the directions of six degrees of freedom by a minute amount for each direction such that the degree of coincidence with the actually measured surface shape data is maximum. More specifically, the combination of the amounts of movement of the first shape data when it is parallelly moved (Δx, Δy, Δz) and rotationally moved (Δθx, Δθy, Δθz) such that the deviation from the actually measured surface shape data is minimized is derived by numerical optimization. That is, the placement error is determined by the movement amounts (Δx, Δy, Δz, Δθx, Δθy, Δθz).

Note that, while the fitting computation is performed by comparing the surface shape of the first shape data and the actually measured surface shape in the present embodiment, the fitting computation may be performed in the dimension of angle for both. That is, by differentiating the function of the first shape data to the first order to represent it as an angle distribution, it can be directly compared with an actually measured angle distribution as an output of the measurement unit 110. The fitting computation using the angle distribution can precisely calculate the placement error because an integration process is not involved.

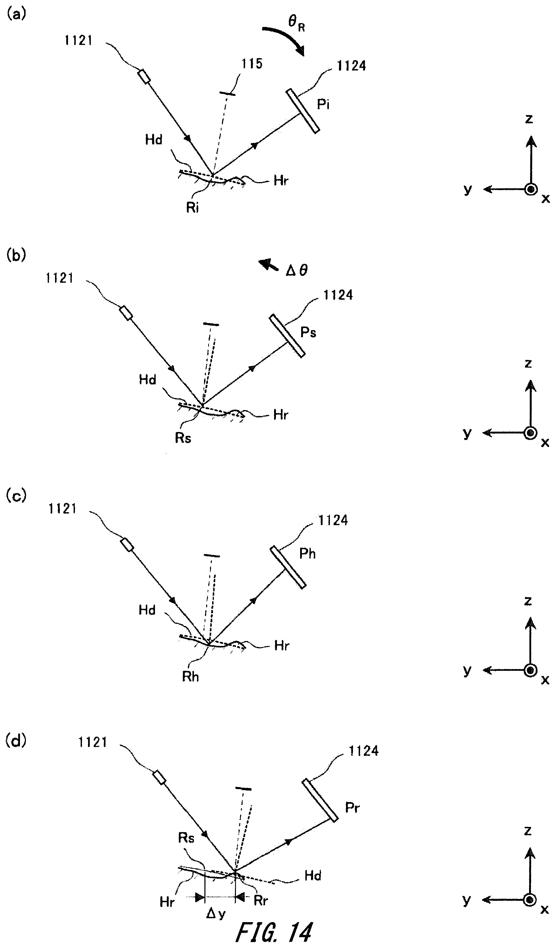

Next, a description will be made of the principle for computing a more accurate surface shape in consideration of the placement error. Fig. 14 is an illustration of the relationship between a position near the measurement point and the second probe light of the angle measurement device 112. The figure represents a simplified view of the angle measurement device 112 with the second light source 1121 and the photodetector 1124. Also, the ideal measurement surface of the first shape data is represented as a reference measurement surface Hd, and the actual measurement surface is represented as an actually measured measurement surface Hr. Also, the measurement surface has a three-dimensional shape, and therefore each phenomenon is observed as a three-dimensional phenomenon such as that reflected light of the second probe light has a three-dimensional vector component, in practice, while the present example is described focusing on phenomena in y-z directions for simplification of descriptions.

In order to reconstruct them as three-dimensional phenomena, components in x-z directions and components in x-y directions are taken into account.

Fig. 14 (a) shows the case where the reference measurement surface Hd is arranged at the target position and the reference position 115 of the measurement unit 110 strictly opposes the reference measurement surface Hd. The measurement unit 110 is rotated by θ_{R} in the θx direction, and there is no rotation error of the second support 130. In this case, the second probe light emitted from the second light source 1121, if it is reflected at a measurement point Ri on the reference measurement surface Hd, is incident at an incident point Pi that is the center of the photodetector 1124. That is, the inclination of the surface at the measurement point Ri is detected as zero.

However, the rotation error Δθ of the second support 130 is added to rotational movement of the measurement unit 110 as described above, and therefore a point deviated from the assumed measurement point is to be measured. Fig. 14 (b) shows the case where the reference measurement surface Hd is arranged at the target position and the measurement unit 110 opposes the reference measurement surface Hd with the rotation error Δθ.

As described above, the minute rotation angle Δθ of the second support 130 can be accurately measured by the interferometer unit 151, and therefore the measurement control part 186 accurately grasps an emission position and an emission direction of the second probe light emitted from the second light source 1121. Thus, the computation part 187 receives information of the emission position and the emission direction of the second probe light, and estimates the output of the photodetector 1124 by ray tracing. Specifically, the computation part 187 calculates the coordinates of the measurement point Rs on the reference measurement surface Hd by ray tracing, calculates the normal direction of the reference measurement surface Hd at the measurement point Rs, and obtains a reflection direction of the second probe light using the normal direction. Then, an incident point Ps of the photodetector 1124 is calculated by further performing ray tracing. That is, the estimated output value of the incident point Ps obtained in this process is a value calculated in consideration of the minute rotation angle Δθ of the second support 130 as an error factor.

Note that, in the present embodiment, it is premised that parallel movement of the second support 130 in the y direction and the z direction is accurately performed as controlled. However, even if an error occurs in the parallel movement, the error amount can be accurately measured by the interferometer unit 151 and the Z sensor 155, and therefore the above ray tracing computation can be performed by taking it into account. That is, an estimated output value of the incident point Ps which takes into consideration errors in parallel movement as well as the minute rotation angle Δθ as error factors can be calculated.

Fig. 14 (c) shows the case where the actually measured measurement surface Hr is arranged at the target position and the measurement unit 110 opposes the reference measurement surface Hd with the rotation error Δθ. That is, the relative relationship between the angle measurement device 112 and each of the actually measured measurement surface Hr and the reference measurement surface Hd is similar to the case of Fig. 14 (b). Fig. 14 (c) shows the second probe light in the case of obtaining an actual output value rather than the estimated output value obtained by ray tracing as in Fig. 14 (b).

In this case, the second probe light emitted from the second light source 1121 is incident at the measurement point Rh on the actually measured measurement surface Hr, is reflected according to the inclination of the actually measured measurement surface Hr at the measurement point Rh, and reaches the photodetector 1124. An incident point Ph of the photodetector 1124 is at the coordinates corresponding to the inclination of the actually measured measurement surface Hr, and the photodetector 1124 outputs a detection signal corresponding to the incident point Ph as the actual output value. In this case, the actual output value is a value output with the minute rotation angle Δθ of the second support 130 as an error factor.

The inclination (referred to as α_{d}) of the reference measurement surface Hd at the measurement point Rs is obtained from the ray tracing computation in Fig. 14 (b), and the inclination (referred to as αᵣ) of the actually measured measurement surface Hr at the measurement point Rh is obtained from the actual output value in Fig. 14 (c). Here, there is almost no deviation in a direction orthogonal to the depth direction of unevenness (direction in the tangent plane of the reference measurement surface Hd at the measurement point Rs) between the measurement point Rs and the measurement point Rh, and their positions can be approximated to be the same. Accordingly, the actual inclination relative to the reference measurement surface at the coordinates Rs can be evaluated as αᵣ - α_{d}. If the coordinates Rs are set as the (n = i)-th measurement coordinates, the inclination αᵢ in Fig. 6 is equal to αᵣ - α_{d}. That is, the computation in Fig. 6 can be performed by calculating αᵣ - α_{d}.

Next, consideration will be made of the case where a placement error is further included in the state of Fig. 14 (b). The present example describes the case where there is a placement error of Δy in the y direction, for the sake of simplification. Fig. 14 (d) shows the case where the actually measured measurement surface Hr is arranged at a position deviated by the placement error Δy, and the reference measurement surface Hd is arranged at the target position and the measurement unit 110 opposes the reference measurement surface Hd with the rotation error Δθ. Fig. 14 (d) shows the second probe light in the case of obtaining an actual output value rather than the estimated output value obtained by ray tracing as in Fig. 14 (b).

In this case, the second probe light emitted from the second light source 1121 is incident at a measurement point Rr on the actually measured measurement surface Hr, is reflected according to the inclination of the actually measured measurement surface Hr at the measurement point Rr, and reaches the photodetector 1124. An incident point Pr of the photodetector 1124 is at the coordinates corresponding to the inclination of the actually measured measurement surface Hr, and the photodetector 1124 outputs a detection signal corresponding to the incident point Pr as the actual output value. In this case, the actual output value is a value output with the minute rotation angle Δθ of the second support 130 and the placement error Δy as error factors.

The measurement control part 186 does not grasp the placement error, and therefore the obtained actual output value is recognized as an actual output value for the coordinates Rs of the reference measurement surface Hd calculated by ray tracing in Fig. 14 (b) without consideration of the placement error. In other words, the computation part 187 recognizes the measurement result of the measurement point Rr as the measurement result of the coordinates Rs. That is, it can be regarded that such inconsistency in correspondence is included in the actual output value with the placement error Δy as an error factor.

More specifically, it is regarded that the difference between the actual inclination at the measurement point Rr and the inclination of the reference measurement surface Hd at the coordinates Rs is recognized as the inclination αᵢ at the coordinates Rs. The surface shape obtained by performing the computation described using Fig. 6 on the calculated value including the placement error as an error factor in this manner is the actually measured surface shape described using Fig. 13. That is, the actually measured surface shape that is first derived with the placement error as an error factor may have a low precision. However, as described above, the actually measured surface shape as a whole can be regarded to be very close to the surface shape of the first shape data, and therefore a placement error amount is calculated by a fitting computation.

When the placement error amount is calculated, the reference measurement surface Hd is rearranged at a position deviated from the target position by the placement error amount and the ray tracing computation in Fig. 14 (b) is performed again. The coordinates of a new measurement point Rs on the reference measurement surface Hd obtained by the recomputation substantially coincide with the coordinates of the measurement point Rr in Fig. 14 (d). Accordingly, the placement error Δy is almost eliminated, and α_{d} and ∝ᵣ at substantially the same point are obtained, and therefore the accurate inclination αᵢ can be calculated. A more precise surface shape can be derived by performing the computation described using Fig. 6 again using αᵢ calculated in this manner.

Note that, if the precision of the actually measured surface shape that is first derived is not so high, the degree of coincidence by the fitting computation is lowered, and therefore the accurate placement error amount may be unable to be calculated. In this case, the above-described computation may be repeatedly performed by subjecting again a recomputed surface shape to the fitting computation for calculating the placement error amount to further calculate a placement error until the degree of coincidence as an evaluation value exceeds a predetermined threshold. In this case, the surface shape derived at the time when the degree of coincidence exceeds the threshold is determined as the final surface shape.

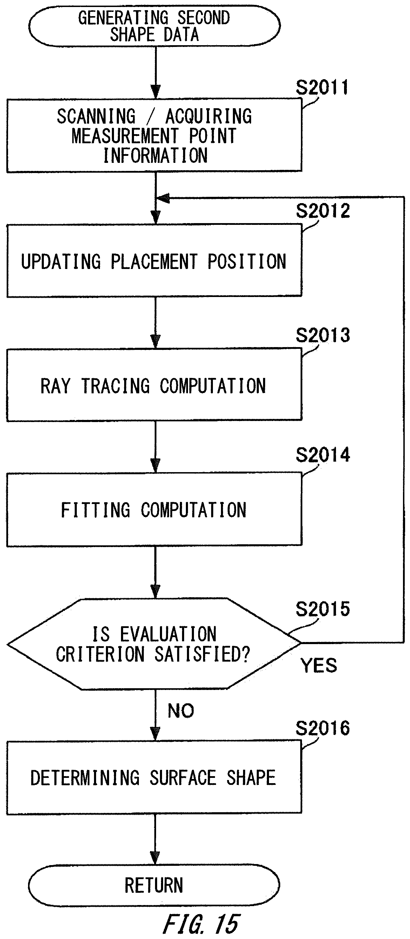

Fig. 15 is a flow chart representing a procedure to obtain second shape data. As described using Fig. 9, the flow starts at the time when, after the first shape data is generated and stored in the memory 183, the measurement object 200 is placed on the X-Y stage 160 by a user and receives an instruction to start measurement from the user via the user interface 182.

At step S2011, the measurement control part 186 drives the X-Y stage 160, the first support 120 and the second support 130 to move the measurement object 200 to an initial position. Then, outputs of measurement points are obtained by the measurement unit 110 to sequentially accumulate information of the measurement points, while driving the X-Y stage 160, the first support 120 and the second support 130 such that the measurement unit 110 scans the measurement surface 201, as described using Fig. 7 and Fig. 8. When the end point of the measurement points is reached, the flow advances to step S2012.

At step S2012, the computation part 187 assumes that the measurement object 200 is placed at the target position on the X-Y stage 160, and sets the placement position of the reference measurement surface of the first shape data as the initial position with zero error amount. The flow proceeds to step S2013, and then the computation part 187 performs the ray tracing computation in Fig. 14 (b) and uses the result of the ray tracing computation to perform the computation for acquiring the actually measured surface shape in Fig. 14 (d).

When the actually measured surface shape is acquired, the flow proceeds to step S2014, and then the computation part 187 performs the computation of fitting the reference measurement surface and the actually measured surface shape as described using Fig. 13. The placement error amount of the measurement object 200 relative to the X-Y stage 160 is calculated by the fitting computation.

The flow proceeds to step S2015, and then the computation part 187 determines whether an evaluation criterion is satisfied or not. Specifically, the evaluation criterion may be whether the calculated placement error amount does not exceed a predetermined reference error amount, or may be whether the maximum degree of coincidence between the reference measurement surface and the actually measured surface shape calculated by the fitting computation exceeds a predetermined threshold. For the evaluation criterion, its reference value may be changed according to a desired measurement precision, the shape of the measurement object 200 or the like, another criterion may be adopted, or a plurality of criteria may be used in combination.

When the computation part 187 determines that the evaluation criterion is not satisfied at step S2015, the flow returns to step S2012. At step S2012, the computation part 187 deviates the placement position of the reference measurement surface by the placement error amount calculated by the fitting computation at step S2014. In this manner, it can be expected that the reference measurement surface becomes closer to the actually measured measurement surface 201 than at the time of the previous computation. Then, the steps after step S2013 are performed again using a new reference measurement surface.

When it is determined that the evaluation criterion is satisfied at step S2015, the flow proceeds to step S2016, and then the computation part 187 determines the actually measured surface shape derived as the final measurement result. For example, the actually measured surface shape determined may be converted as a graphic image by the image generation part 188 to display it on the user interface 182. A sequence of processes ends when presentation to the user ends.

While the computation part 187 of the surface shape measurement apparatus 10 performs the fitting computations of step S1013 in Fig. 11 and step S2014 in Fig. 15 in the above embodiment, the fitting computations may be performed by external computation equipment. For example, the surface shape measurement apparatus 10 may be configured to have a communication part so as to be connected to an external cloud server, and to perform the fitting process computations on the cloud server. Also, the ray tracing computation of step S2013 in Fig. 15 may be performed by external computation equipment similarly.

While the above embodiment has described the example where only parameters for the shape of the surface are selected as the fitting parameters for generating the first shape data, an eccentric parameter as a movement amount for coincidence of the positions and attitudes may be selected in conjunction to simultaneously perform elimination of the placement error. The problem that the fitting does not converge due to the placement error can be avoided by adding the eccentric parameter as a fitting parameter. Also, the fitting computation for eliminating the placement error described using Fig. 13 can be skipped.

While the first shape data of an unknown measurement object is determined as the fitting function that is an approximate curved surface of the three-dimensional coordinate data acquired using the distance measurement device in the above embodiment, the first shape data may be configured by a subroutine for interpolating the shape of the acquired three-dimensional coordinate data without performing fitting with function. For example, a NURBS (None Uniform Rational B-Spline) curved surface can be used. In this manner, the first shape data of the measurement object can be generated regardless of the distribution shape of the three-dimensional coordinate data and the placement error of the measurement object.

While the above embodiment has described the case where a Zernike polynomial is used as an example of the fitting function, a known function such as an X-Y polynomial and a general aspherical surface formula developed in power series can also be used. Also, the fitting function may be arbitrarily defined by the user. The fitting function may also be arbitrarily selected by the user from a plurality of functions in the fitting process for the first shape data.

While the above embodiment has described the case where a Zernike polynomial is used as an example of the fitting function, a function representing a spherical surface can be used as the fitting function (the fitting parameter is only the curvature or the radius of curvature). In this case, in the fitting computation process for calculating the placement error described using Fig. 13, the amounts of parallel movement until the centers of curvature coincide (Δx, Δy, Δz) can be calculated while the amounts of rotational movement (Δθx, Δθy, Δθz) can not be uniquely defined. Thus, the subsequent fitting computation processes are performed with predetermined values set as the amounts of rotational movement, for example. It is because, in the case of a spherical surface, the coordinates of the measurement point can be correctly calculated in the ray tracing computation as long as the amounts of parallel movement (Δx, Δy, Δz) are grasped.

The surface shape measurement apparatus 10 described above moves the head provided with the measurement unit 110 in three degrees of freedom consisting of parallel movement in y-z plane and rotational movement in the θx direction. Weight reduction of the head is achieved and speed enhancement of measurement is realized by adopting the configuration in which the head can move only in the three degrees of freedom. However, the speed enhancement of measurement is significantly contributed to not only by optimization of the head configuration but also simplification of controls and simplification of computations by limiting the degree of freedom of movement to the three degrees of freedom.

From this point of view, even if the head itself has a configuration which allows movement in more degrees of freedom, the speed enhancement of measurement can be realized by performing controls limited to three degrees of freedom consisting of parallel movement in the y-z plane and rotational movement in the θx direction in the case of measuring a rotationally symmetric surface. That is, accurate and rapid measurement can be realized by the measurement control part performing controls while limiting movement of the head to the three degrees of freedom. Accordingly, even if the measurement apparatus is a general-purpose apparatus, the speed enhancement of measurement can be expected to be realized at a certain level by changing the measurement control program in the case of measuring a rotationally symmetric surface.

While the above embodiment is described assuming that the measurement surface 201 is a rotationally symmetric surface, even in the case of a measurement object having a surface that is not a rotationally symmetric surface, a precise surface shape can be derived by a similar method. For example, in the case of deriving a precise surface shape for a free-form surface, configurations that are based on the characteristics of a rotationally symmetric surface may be changed among the configurations described above. For example, the surface shape measurement apparatus 10 adopts a mechanism to move the first support 120 in the x direction and also rotates it in the θy direction so that the measurement unit 110 can take an attitude opposing the measurement point. In association with this, a sensor is also provided to monitor the movement amount and the rotation angle.

In the case of a measurement object having a rotationally symmetric surface, the initial position is adopted such that the rotational symmetry axis of the rotationally symmetric surface and the rotation axis of θz rotation approximately coincide with each other. However, in the case of measuring a free-form surface, the initial position relative to the X-Y stage 160 is different from it. Also, a measurement point on a free-form surface is set differently from the case of utilizing symmetry of the rotationally symmetric surface as described using Fig. 8 and, for example, the measurement point is set at a lattice point of its projection on the x-y plane. In this case, the measurement control part 186 does not rotate the X-Y stage 160 in the θz direction but parallelly move it in x-y directions during measurement.

If measurement is performed while moving the X-Y stage 160 in x-y directions, the initial position may be defined at any position. However, it is regarded that movement of the X-Y stage 160 in x-y directions has a precision similar to the precision of movement of the second support 130 in y-z directions. In this case, as a component of rotation of the second support 130 in the θx direction is detected using the interferometer unit 151, a component of rotation of the X-Y stage 160 in the θz direction is also precisely detected utilizing a similar interferometer unit, for example.

If the deviation between the rotational symmetry axis of the rotationally symmetric surface and the rotation axis of θz rotation does not cause the difference between the actual reflection point and the coordinates of the measurement point being recognized as described using Fig. 14 (d), the processes from step S2012 to step S2015 described above is unnecessary. In other words, the difference between the actual reflection point and the coordinates of the measurement point being recognized can be practically ignored by performing the measurement of step S 2011 while controlling the measurement unit 110 to take an attitude opposing the measurement point using the fitting function calculated as the first shape data.

While the depth direction of unevenness is described as a direction orthogonal to the rotationally symmetric surface in Fig. 4, the depth of unevenness to be derived as the surface shape may simply be the depth in the z direction, for example. As described above, the measurement control part 186 performs measurement such that the measurement unit 110 takes an attitude opposing the measurement point, and therefore information of unevenness to be measured has a three-dimensional vector. Accordingly, depending on which section the user needs to evaluate the surface shape in, the surface shape in the section can be generated by resolving the unevenness information into components for the directions of the section.

While a Zernike polynomial that is easily applied to a rotationally symmetric surface is used as the fitting function in the above-described embodiment, a variety of fitting functions can be applied to a free-form surface. For example, an X-Y polynomial can be used.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: surface shape measurement apparatus, 100: base, 101: θz driving motor, 102: X-Y driving motor, 103: θz sensor, 104: X-Y sensor, 110: measurement unit, 111: distance measurement device, 112: angle measurement device, 113: holder, 115: reference position, 120: first support, 130: second support, 131: rotary encoder, 132: θx driving motor, 140: first frame, 141: Y-Z driving motor, 150: second frame, 151: interferometer unit, 153: first interferometer, 154: second interferometer, 155: Z sensor, 160: X-Y stage, 161: chuck, 180: control unit, 181: system control part, 182: user interface, 183: memory, 186: measurement control part, 187: computation part, 188: image generation part, 200: measurement object, 201: measurement surface, 202: holding part, 210: rotational symmetry axis, 1111: first light source, 1112, 1113, 1122: condenser lens, 1114, 1124: photodetector, 1121: second light source, 1123: collimator lens

## Claims

1. A surface shape measurement apparatus (10) to measure a surface shape of a measurement object, wherein the surface shape measurement apparatus comprises:
a measurement unit (110) having a distance measurement device (111) arranged to measure a distance to a measurement point on a surface of the measurement object using a first probe light and an angle measurement device (112) arranged to measure inclination of the surface at said measurement point using a second probe light; a first calculation part (187) configured to calculate reference shape data of the measurement object based on the distance measured by the distance measurement device; and
a second calculation part (187) configured to calculate detailed shape data of the measurement object based on said inclination at the measurement point measured by the angle measurement device, said calculated reference shape data, and a sampling interval that is the sampling interval when scanning the angle measurement device,
wherein the first probe light and the second probe light overlap at a reference distance from a reference position of the surface shape measurement apparatus, and
wherein the surface shape measurement apparatus is configured to perform scanning such that the distance between the measurement unit and the surface of the measurement object is kept at the reference distance.

2. The surface shape measurement apparatus according to claim 1, wherein the detailed shape data has a higher precision than the reference shape data.

3. The surface shape measurement apparatus according to claim 1 or 2, comprising:
a support (120) arranged to support the distance measurement device and the angle measurement device;
a driving part (132, 141) arranged to move the support relative to the measurement object; and
a control part (186) configured to control the driving part, wherein
when measuring the inclination by the angle measurement device, the control part is configured to cause the support to scan by the driving part such that the support opposes a tangent plane at the measurement point calculated from the reference shape data and a distance from the measurement point is constant.

4. The surface shape measurement apparatus according to claim 3, wherein
the measurement object at least partially has a substantially rotationally symmetric shape, and a target for measurement is a surface shape of a rotationally symmetric surface,
the surface shape measurement apparatus comprises:
a stage (160) arranged to support the measurement object; and
an actuation part (101, 102) arranged to rotationally move the stage around an axis parallel to a rotational symmetry axis of the rotationally symmetric surface, and
when measuring the distance by the distance measurement device and measuring the inclination by the angle measurement device, the control part (186) is configured to cause the stage to be rotationally moved by the actuation part.

5. The surface shape measurement apparatus according to claim 4, wherein
the second calculation part is configured to calculate an error amount of a placement error of the measurement object relative to the stage due to deviation between the rotational symmetry axis of the measurement object and a rotation axis of rotational movement of the stage, and to calculate the detailed shape data using the reference shape data modified in consideration of the error amount and an output of the angle measurement device.

6. The surface shape measurement apparatus according to claim 5, wherein the second calculation part is configured to recalculate the error amount using the detailed shape data temporarily obtained, and further recomputes the detailed shape data based on the recalculated error amount.

7. The surface shape measurement apparatus according to any one of claims 1 to 6, wherein
the distance measurement device includes a first light source (1111) and a first photodetector (1114) arranged to detect first reflected light that has been reflected on the measurement object of light generated by the first light source, and
the angle measurement device includes a second light source (1121) and a second photodetector (1124) arranged to detect second reflected light that has been reflected on the measurement object of light generated by the second light source.

8. The surface shape measurement apparatus according to claim 7, wherein
a first reference plane between the first light source and the first photodetector and a second reference plane between the second light source and the second photodetector are provided such that the first reference plane and the second reference plane are orthogonal to each other.

9. The surface shape measurement apparatus according to any one of claims 1 to 8, wherein
the distance measurement device includes a condenser lens (1113) arranged to condense the first reflected light, and
the angle measurement device includes a collimator lens (1123) arranged to collimate the second reflected light.

10. A surface shape measurement method to measure a surface shape of a measurement object comprising:
a distance measurement step to measure a distance to a measurement point on a surface of the measurement object by a distance measurement device (111) using a first probe light;
a first calculation step to calculate reference shape data of the measurement object based on the distance measured in the distance measurement step;
an angle measurement step to measure inclination of the surface at the measurement point by an angle measurement device (112) using a second probe light; and
a second calculation step to calculate detailed shape data of the measurement object based on said inclination at the measurement point measured in the angle measurement step, the reference shape data, and a sampling interval when scanning the angle measurement device,
wherein the first probe light and the second probe light overlap at a reference distance from a reference position of the surface shape measurement apparatus, and
wherein the scanning is performed such that the distance between i) a measurement unit (110) having the distance measurement device and the angle measurement device and ii) the surface of the measurement object is kept at the reference distance.

11. The surface shape measurement method according to claim 10, wherein
in the angle measurement step, a support (120) which supports the distance measurement device and the angle measurement device is caused to scan such that the support opposes a tangent plane at the measurement point calculated from the reference shape data and a distance from the measurement point is constant.

12. A surface shape measurement program to measure a surface shape of a measurement object, wherein the surface shape measurement program is executable to cause a surface shape measurement apparatus according to claims 1 to 9 to perform the method according to claim 10 or 11.

13. A computer readable recording medium storing the program according to claim 12.

## Patentansprüche

1. Oberflächenformmessvorrichtung (10) zum Messen einer Oberflächenform eines Messobjekts, wobei die Oberflächenformmessvorrichtung aufweist:
eine Messeinheit (110) mit einer Abstandsmessvorrichtung (111), die so eingerichtet ist, dass sie einen Abstand zu einem Messpunkt an einer Oberfläche des Messobjekts unter Verwendung eines ersten Abtastlichts misst, und einer Winkelmessvorrichtung (112), die so eingerichtet ist, dass sie eine Neigung der Oberfläche an dem Messpunkt unter Verwendung eines zweiten Abtastlichts misst;
einen ersten Berechnungsteil (187), der so konfiguriert ist, dass er Referenzformdaten des Messobjekts auf der Grundlage des von der Abstandsmessvorrichtung gemessenen Abstands berechnet; und
einen zweiten Berechnungsteil (187), der so konfiguriert ist, dass er detaillierte Formdaten des Messobjekts auf der Grundlage der von der Winkelmessvorrichtung gemessenen Neigung an dem Messpunkt, der berechneten Referenzformdaten und eines Abtastintervalls berechnet, das das Abtastintervall ist, wenn die Winkelmessvorrichtung, abtastet,
wobei das erste Abtastlicht und das zweite Abtastlicht sich in einem Referenzabstand von einer Referenzposition der Oberflächenformmessvorrichtung überlappen, und
wobei die Oberflächenformmessvorrichtung so konfiguriert ist, dass sie die Abtastung so durchführt, dass der Abstand zwischen der Messeinheit und der Oberfläche des Messobjekts auf dem Referenzabstand gehalten wird.

2. Oberflächenformmessvorrichtung nach Anspruch 1, wobei die detaillierten Formdaten eine höhere Präzision aufweisen als die Referenzformdaten.

3. Oberflächenformmessvorrichtung nach Anspruch 1 oder 2, aufweisend:
einen Träger (120), der so eingerichtet ist, dass er die Abstandsmessvorrichtung und die Winkelmessvorrichtung stützt;
einen Antriebsteil (132, 141), der so eingerichtet ist, dass er den Träger relativ zu dem Messobjekt bewegt; und
einen Steuerungsteil (186), der so konfiguriert ist, dass er den Antriebsteil steuert, wobei
wenn die Neigung durch die Winkelmessvorrichtung gemessen wird, der Steuerungsteil konfiguriert ist, dass er den Träger veranlasst, durch den Antriebsteil so abzutasten, dass der Träger einer Tangentialebene an dem Messpunkt gegenüberliegt, die aus den Referenzformdaten berechnet wird, und ein Abstand von dem Messpunkt konstant ist.

4. Oberflächenformmessvorrichtung nach Anspruch 3, wobei
das Messobjekt zumindest teilweise eine im Wesentlichen rotationssymmetrische Form aufweist und ein Ziel zur Messung eine Oberflächenform einer rotationssymmetrischen Oberfläche ist,
die Oberflächenformmessvorrichtung aufweist:
einen Tisch (160), der so angeordnet ist, dass er das Messobjekt stützt; und
einen Betätigungsteil (101, 102), der so eingerichtet ist, dass er den Tisch um eine Achse parallel zu einer Rotationssymmetrieachse der rotationssymmetrischen Oberfläche rotierend bewegt, und
wenn der Abstand durch die Abstandsmessvorrichtung gemessen wird und die Neigung durch die Winkelmessvorrichtung gemessen wird, der Steuerungsteil (186) so konfiguriert ist, dass er den Tisch veranlasst, durch den Betätigungsteil rotierend bewegt zu werden.

5. Oberflächenformmessvorrichtung nach Anspruch 4, wobei
der zweite Berechnungsteil so konfiguriert ist, dass er einen Fehlerbetrag eines Platzierungsfehlers des Messobjekts relativ zu dem Tisch aufgrund einer Abweichung zwischen der Rotationssymmetrieachse des Messobjekts und einer Rotationsachse der Rotationsbewegung des Tisches berechnet und die detaillierten Formdaten unter Verwendung der Referenzformdaten, die unter Berücksichtigung des Fehlerbetrags modifiziert wurden, und einer Ausgabe der Winkelmessvorrichtung berechnet.

6. Oberflächenformmessvorrichtung nach Anspruch 5, wobei der zweite Berechnungsteil so konfiguriert ist, dass er den Fehlerbetrag unter Verwendung der temporär erhaltenen detaillierten Formdaten neu berechnet, und ferner die detaillierten Formdaten auf der Grundlage des neu berechneten Fehlerbetrags neu rechnet.

7. Oberflächenformmessvorrichtung nach einem der Ansprüche 1 bis 6, wobei
die Abstandsmessvorrichtung eine erste Lichtquelle (1111) und einen ersten Fotodetektor (1114) enthält, der so eingerichtet ist, dass er erstes reflektiertes Licht erfasst, das an dem Messobjekt von Licht reflektiert wurde, das von der ersten Lichtquelle erzeugt wurde, und
die Winkelmessvorrichtung eine zweite Lichtquelle (1121) und einen zweiten Fotodetektor (1124) enthält, der so eingerichtet ist, dass er zweites reflektiertes Licht erfasst, das an dem Messobjekt von Licht reflektiert wurde, das von der zweiten Lichtquelle erzeugt wurde.

8. Oberflächenformmessvorrichtung nach Anspruch 7, wobei
eine erste Referenzebene zwischen der ersten Lichtquelle und dem ersten Fotodetektor und eine zweite Referenzebene zwischen der zweiten Lichtquelle und dem zweiten Fotodetektor so vorgesehen sind, dass die erste Referenzebene und die zweite Referenzebene orthogonal zueinander sind.

9. Oberflächenformmessvorrichtung nach einem der Ansprüche 1 bis 8, wobei
die Abstandsmessvorrichtung eine Kondensorlinse (1113) enthält, die so eingerichtet ist, dass sie das erste reflektierte Licht kondensiert, und
die Winkelmessvorrichtung eine Kollimatorlinse (1123) enthält, die so eingerichtet ist, dass sie das zweite reflektierte Licht kollimiert.

10. Oberflächenformmessverfahren zum Messen einer Oberflächenform eines Messobjekts, das aufweist:
einen Abstandsmessschritt zum Messen eines Abstands zu einem Messpunkt an einer Oberfläche des Messobjekts durch eine Abstandsmessvorrichtung (111) unter Verwendung eines ersten Abtastlichts;
einen ersten Berechnungsschritt zum Berechnen von Referenzformdaten des Messobjekts auf der Grundlage des in dem Abstandsmessschritt gemessenen Abstands;
einen Winkelmessschritt zum Messen von Neigung der Oberfläche an dem Messpunkt durch eine Winkelmessvorrichtung (112) unter Verwendung eines zweiten Abtastlichts; und
einen zweiten Berechnungsschritt zum Berechnen detaillierter Formdaten des Messobjekts auf der Grundlage der in dem Winkelmessschritt gemessenen Neigung an dem Messpunkt, der Referenzformdaten und eines Abtastintervalls, wenn die Winkelmessvorrichtung abtastet,
wobei das erste Abtastlicht und das zweite Abtastlicht sich in einem Referenzabstand von einer Referenzposition der Oberflächenformmessvorrichtung überlappen, und
wobei das Abtasten so durchgeführt wird, dass der Abstand zwischen i) einer Messeinheit (110) mit der Abstandsmessvorrichtung und der Winkelmessvorrichtung und ii) der Oberfläche des Messobjekts auf dem Referenzabstand gehalten wird.

11. Oberflächenformmessverfahren nach Anspruch 10, wobei
in dem Winkelmessschritt ein Träger (120), der die Abstandsmessvorrichtung und die Winkelmessvorrichtung stützt, veranlasst wird, so abzutasten, dass der Träger einer Tangentialebene an dem Messpunkt, der aus den Referenzformdaten berechnet wird, gegenüberliegt und ein Abstand von dem Messpunkt konstant ist.

12. Oberflächenformmessprogramm zum Messen einer Oberflächenform eines Messobjekts, wobei das Oberflächenformmessprogramm ausführbar ist, um eine Oberflächenformmessvorrichtung nach einem der Ansprüche 1 bis 9 zu veranlassen, das Verfahren nach Anspruch 10 oder 11 durchzuführen.

13. Computerlesbares Aufzeichnungsmedium, das das Programm nach Anspruch 12 speichert.

## Revendications

1. Appareil de mesure de forme de surface (10) pour mesurer une forme de surface d'un objet de mesure, dans lequel l'appareil de mesure de forme de surface comprend :
une unité de mesure (110) comprenant un dispositif de mesure de distance (111) agencé pour mesurer une distance jusqu'à un point de mesure sur une surface de l'objet de mesure en utilisant une première lumière de sonde et un dispositif de mesure d'angle (112) agencé pour mesurer une inclinaison de la surface au niveau dudit point de mesure en utilisant une seconde lumière de sonde ;
une première partie de calcul (187) configurée pour calculer des données de forme de référence de l'objet de mesure sur la base de la distance mesurée par le dispositif de mesure de distance ; et
une seconde partie de calcul (187) configurée pour calculer des données de forme détaillées de l'objet de mesure sur la base de ladite inclinaison au niveau du point de mesure mesurée par le dispositif de mesure d'angle, desdites données de forme de référence calculées, et d'un intervalle d'échantillonnage qui est l'intervalle d'échantillonnage lors du balayage du dispositif de mesure d'angle,
dans lequel la première lumière de sonde et la seconde lumière de sonde se chevauchent à une distance de référence à partir d'une position de référence de l'appareil de mesure de forme de surface, et
dans lequel l'appareil de mesure de forme de surface est configuré pour effectuer un balayage de telle sorte que la distance entre l'unité de mesure et la surface de l'objet de mesure est maintenue à la distance de référence.

2. Appareil de mesure de forme de surface selon la revendication 1, dans lequel les données de forme détaillées sont plus précises que les données de forme de référence.

3. Appareil de mesure de forme de surface selon la revendication 1 ou 2, comprenant :
un support (120) agencé pour supporter le dispositif de mesure de distance et le dispositif de mesure d'angle ;
une partie d'entraînement (132, 141) agencée pour déplacer le support par rapport à l'objet de mesure ; et
une partie de commande (186) configurée pour commander la partie d'entraînement, dans lequel
lors de la mesure de l'inclinaison par le dispositif de mesure d'angle, la partie de commande est configurée pour amener le support à effectuer un balayage par la partie d'entraînement de telle sorte que le support s'oppose à un plan tangent au point de mesure calculé à partir des données de forme de référence et qu'une distance à partir du point de mesure est constante.

4. Appareil de mesure de forme de surface selon la revendication 3, dans lequel
l'objet de mesure présente au moins partiellement une forme sensiblement à symétrie de rotation, et une cible de mesure est une forme de surface d'une surface à symétrie de rotation,
l'appareil de mesure de forme de surface comprend :
une platine (160) agencée pour supporter l'objet de mesure ; et
une partie d'actionnement (101, 102) agencée pour déplacer en rotation la platine autour d'un axe parallèle à un axe de symétrie de rotation de la surface à symétrie de rotation, et
lors de la mesure de la distance par le dispositif de mesure de distance et de la mesure de l'inclinaison par le dispositif de mesure d'angle, la partie de commande (186) est configurée pour amener la platine à être déplacée en rotation par la partie d'actionnement.

5. Appareil de mesure de forme de surface selon la revendication 4, dans lequel
la seconde partie de calcul est configurée pour calculer une quantité d'erreur d'une erreur de placement de l'objet de mesure par rapport à la platine en raison d'une déviation entre l'axe de symétrie de rotation de l'objet de mesure et un axe de rotation de mouvement de rotation de la platine, et pour calculer les données de forme détaillées en utilisant les données de forme de référence modifiées en tenant compte de la quantité d'erreur et d'une sortie du dispositif de mesure d'angle.

6. Appareil de mesure de forme de surface selon la revendication 5, dans lequel la seconde partie de calcul est configurée pour recalculer la quantité d'erreur en utilisant les données de forme détaillées obtenues temporairement, et recalcule en outre les données de forme détaillées sur la base de la quantité d'erreur recalculée.

7. Appareil de mesure de forme de surface selon l'une quelconque des revendications 1 à 6, dans lequel
le dispositif de mesure de distance inclut une première source de lumière (1111) et un premier photodétecteur (1114) agencé pour détecter une première lumière réfléchie qui a été réfléchie sur l'objet de mesure de la lumière générée par la première source de lumière, et
le dispositif de mesure d'angle inclut une seconde source de lumière (1121) et un second photodétecteur (1124) agencé pour détecter une seconde lumière réfléchie qui a été réfléchie sur l'objet de mesure de la lumière générée par la seconde source de lumière.

8. Appareil de mesure de forme de surface selon la revendication 7, dans lequel
un premier plan de référence entre la première source de lumière et le premier photodétecteur et un second plan de référence entre la seconde source de lumière et le second photodétecteur sont fournis de sorte que le premier plan de référence et le second plan de référence sont orthogonaux l'un à l'autre.

9. Appareil de mesure de forme de surface selon l'une quelconque des revendications 1 à 8, dans lequel
le dispositif de mesure de distance inclut une lentille de condenseur (1113) agencée pour condenser la première lumière réfléchie, et
le dispositif de mesure d'angle inclut une lentille de collimateur (1123) agencée pour collimater la seconde lumière réfléchie.

10. Procédé de mesure de forme de surface pour mesurer une forme de surface d'un objet de mesure comprenant :
une étape de mesure de distance pour mesurer une distance jusqu'à un point de mesure sur une surface de l'objet de mesure par un dispositif de mesure de distance (111) en utilisant une première lumière de sonde ;
une première étape de calcul pour calculer des données de forme de référence de l'objet de mesure sur la base de la distance mesurée dans l'étape de mesure de distance ;
une étape de mesure d'angle pour mesurer une inclinaison de la surface au niveau du point de mesure par un dispositif de mesure d'angle (112) en utilisant une seconde lumière de sonde ; et
une seconde étape de calcul pour calculer des données de forme détaillées de l'objet de mesure sur la base de ladite inclinaison au niveau du point de mesure mesurée dans l'étape de mesure d'angle, les données de forme de référence, et un intervalle d'échantillonnage lors du balayage du dispositif de mesure d'angle,
dans lequel la première lumière de sonde et la seconde lumière de sonde se chevauchent à une distance de référence à partir d'une position de référence de l'appareil de mesure de forme de surface, et
dans lequel le balayage est effectué de telle sorte que la distance entre i) une unité de mesure (110) comprenant le dispositif de mesure de distance et le dispositif de mesure d'angle et ii) la surface de l'objet de mesure est maintenue à la distance de référence.

11. Procédé de mesure de forme de surface selon la revendication 10, dans lequel
dans l'étape de mesure d'angle, un support (120) qui supporte le dispositif de mesure de distance et le dispositif de mesure d'angle est amené à effectuer un balayage de telle sorte que le support s'oppose à un plan tangent au point de mesure calculé à partir des données de forme de référence et qu'une distance à partir du point de mesure est constante.

12. Programme de mesure de forme de surface pour mesurer une forme de surface d'un objet de mesure, dans lequel le programme de mesure de forme de surface peut être exécuté pour amener un appareil de mesure de forme de surface selon les revendications 1 à 9 à mettre en oeuvre le procédé selon la revendication 10 ou 11.

13. Support d'enregistrement lisible par ordinateur stockant le programme selon la revendication 12.
